# NEUE EUROPÄISCHE PATENTSCHRIFT

(11) **EP 2 792 625 B2**
(45) Veröffentlichungstag und Bekanntmachung des Hinweises auf die Entscheidung über den Einspruch: **22.01.2020**
(45) Hinweis auf die Patenterteilung: 17.08.2016
(21) Anmeldenummer: 14160766.3
(22) Anmeldetag: 19.03.2014
(51) Int. Cl.: B65G 47/244, B65G 47/31, B65G 15/14

(54) **Verfahren und Vorrichtung zur Förderung und Handhabung von Gebinden mit wenigstens zwei Artikeln**
Method and device for conveying and handling batches of at least two articles
Procédé et dispositif de transport et de manipulation de lots comprenant au moins deux articles

(30) Priorität: 19.04.2013 DE 102013207138
(43) Veröffentlichungstag der Anmeldung: 22.10.2014
(73) Patentinhaber: Krones Aktiengesellschaft, 93073 Neutraubling (DE)
(72) Erfinder: Elsperger, Stefan, 93073 Neutraubling (DE); Perl, Kurt, 93073 Neutraubling (DE); Kieslinger, Manfred, 93073 Neutraubling (DE); Ehberger, Marco, 93073 Neutraubling (DE); Gabler, Markus, 93073 Neutraubling (DE); Dietersberger, Martin, 93073 Neutraubling (DE); Hartl, Michael, 93073 Neutraubling (DE); Zeiner, Peter, 93073 Neutraubling (DE)
(74) Vertreter: Benninger, Johannes

(56) Entgegenhaltungen:
- EP-A1- 0 163 330
- DE-A1- 19 605 133
- DE-U1- 20 317 567

## Beschreibung

Die vorliegende Erfindung betrifft ein Verfahren zur Förderung und Handhabung von Gebinden mit wenigstens zwei zusammengehaltenen und/oder aneinander haftenden Artikeln mit den Merkmalen des unabhängigen Anspruchs 1. Die Erfindung betrifft weiterhin eine Förder- und Handhabungsvorrichtung für solche Gebinde mit wenigstens zwei zusammengehaltenen und/oder aneinander haftenden Artikeln mit den Merkmalen des unabhängigen Anspruchs 8.

Sollen einzelne Artikel oder Behälter zu Gebinden definierten Umfangs zusammengefasst werden, so können die in gewünschter Weise angeordneten und zusammengestellten Behälter bspw. mittels einer Umverpackung umhüllt werden. Als Umverpackung wird häufig Schrumpffolie verwendet. Aus Kostengründen, aufgrund des oftmals einfacheren Handlings, der reduzierten Herstellungsschritte und des reduzierten Energieaufwandes werden Artikel oder Behälter immer häufiger als sog. Umreifungsgebinde ausgeführt, bei denen zwei, drei, vier, sechs oder mehr einzelne Artikel oder Behälter mittels eines horizontal um die Behälter geführten und diese unter definierter Vorspannung zusammenhaltenden Umreifungsbandes aneinander fixiert sind und auf diese Weise ein stabiles Gebinde bilden. Um die Formstabilität des Gebindes und seine Robustheit im Handling zu erhöhen, können wahlweise zwei parallele Umreifungsbänder und/oder einzelne Verklebungsstellen zwischen den Behältern eingesetzt werden.

Dennoch können durch Fertigungsfehler, zu große Toleranzen bei der Aufbringung der Gebindevorspannung, durch Kollisionen oder andere Probleme beim Transport und/oder beim Handling der Umreifungsgebinde unerwartete Schwierigkeiten auftreten, die sich insbesondere in fehlerhaften bzw. aufgrund von Toleranzüberschreitungen als fehlerhaft zu beurteilenden Umreifungsgebinden bemerkbar machen können. Da die Umreifungsgebinde vor ihrer Verpackung zu größeren Gebinden, ihrer Palettierung oder weiteren Handhabungsschritten meist mittels verschiedener, sich aneinander anschließender Horizontalfördereinrichtungen transportiert werden, kann es vorkommen, dass potenziell instabile Gebinde, bei denen sich einzelne Artikel oder Behälter bei bestimmten Beanspruchungs- oder Transportsituationen lösen, oder die dabei gänzlich in ihre einzelnen Bestandteile zerfallen könnten, nicht identifiziert und als fehlerhaft erkannt und ausgesondert werden, da die Gebinde beim stehenden Transport aufgrund der unveränderten Artikel- oder Behälterausrichtung unauffällig bleiben. Die beschriebene Instabilität kann in erster Linie bei fehlender Banderole und/oder Umreifung und/oder auch bei unzureichender Bandspannung auftreten und zu den erwähnten Problemen führen.

Zur Erkennung und ggf. Aussonderung fehlerhafter Artikel oder Gebinde sind unterschiedliche Maßnahmen bekannt geworden. So offenbart die DE 10 2009 003 847 A1 eine Variante zur Ausleitung von bewegten Objekten wie Getränkebehältern o. dgl. aus einer Transportspur. Eine fehlerhafte Füllhöhe der Behälter kann bspw. mittels einer optischen Sensoreinrichtung oder einer Gewichtserfassung erkannt und der betroffene Behälter mittels eines linear und quer zur Transportrichtung beweglichen Schiebers verschoben und damit aus dem Förderstrom ausgeleitet werden.

Eine Verpackungseinrichtung, die mit optischen Sensoren arbeitet, geht weiterhin aus der DE 690 00 502 T2 hervor, die eine Vorrichtung zum Überführen von Gegenständen von einem Förderer mit zwei, eine Förderfläche bildenden Fördergurten zu einer Sammelvorrichtung offenbart. Jeder der Fördergurte ist an einem kippbaren Rahmen angeordnet, der mit einer Kippeinrichtung ausgestattet ist. Um in der Sammeleinrichtung eine definierte Anzahl von Gegenständen aufnehmen zu können, ist an einem Abgabeende des Förderers eine optische Erfassungseinrichtung angeordnet, um die Kippeinrichtung der Fördergurte auszulösen, sobald sich dort ein Gegenstand oder mehrere Gegenstände befinden, die in die Sammelvorrichtung abgegeben werden sollen.

Die DE 10 2011 106 759 B3 offenbart weiterhin ein Verfahren zum Herstellen von Gebinden aus klebend miteinander verbundenen Behältern, die vor ihrer Zusammenfassung hinsichtlich eines markanten Ausstattungsmerkmals ausgerichtet werden, so dass die Behälter in dem fertig gestellten Klebegebinde eine vorgegebene Soll-Orientierung aufweisen. Sowohl bei bekannten Umreifungsgebinden als auch bei sog. Klebegebinden können mehrere Fehler auftreten, seien es fehlerhalft aufgebrachte oder gänzlich fehlende Umreifungsbänder, fehlerhafte Verklebungen, fehlerhafte oder fehlende Etiketten oder sonstige Ausstattungsmerkmale, oder seien es beschädigte Behälter, die zu fehlerbehafteten Gebinden führen, die vor einer weiteren Verarbeitung und/oder Verpackung erkannt und ausgesondert werden sollten.

EP O 163 330 A1 beschreibt ein gattungsgemäßes Verfahren.

Um diese fehlerhaften Gegenstände, Artikel, Behälter oder Gebinde aus einem Förderstrom auszusondern oder eine Zusammenfassung mit einwandfreien Artikeln bei ihrer Verpackung zu verhindern, sind sowohl Sensoren mit nachgeschalteter Signalverarbeitung als auch steuerbare Aktoren unterschiedlicher Bauart notwendig, was einen nicht unerheblichen technischen und baulichen Aufwand bei entsprechend auszustattenden Förder- und/oder Verpackungsmaschinen bedeutet.

Ein vorrangiges Ziel der vorliegenden Erfindung besteht darin, ein effizient arbeitendes Verfahren sowie eine entsprechende Vorrichtung zur Beförderung und Handhabung von Gebinden mit wenigstens zwei zusammengehaltenen und/oder aneinander haftenden Artikeln, die bspw. mittels wenigstens eines vorgespannten Umreifungsbandes zusammengehalten oder auch miteinander verklebt sein können, zur Verfügung zu stellen, bei dem fehlerhafte Gebinde sowohl erkannt als auch auf möglichst einfache und effektive Weise aus einem Förderstrom ausgeleitet und entfernt werden können. Darüber hinaus sollen mit der Vorrichtung und mit dem Verfahren Anordnungsstrukturen der Gebinde durch Veränderung der Artikelausrichtung zueinander nach Bedarf variiert werden können.

Diese Ziele der Erfindung werden mit den Gegenständen der unabhängigen Ansprüche erreicht. Merkmale vorteilhafter Weiterbildungen der Erfindung ergeben sich aus den abhängigen Ansprüchen. So schlägt die Erfindung zur Erreichung zumindest eines der genannten Ziele ein Verfahren zur Förderung bzw. zum Transport und zur Handhabung von Gebinden mit wenigstens zwei z.B. umreiften und dadurch zusammengehaltenen und/oder miteinander verklebten und dadurch aneinander gefügten Artikeln vor. Die Gebinde werden innerhalb eines definierten Transportabschnittes in horizontaler Förderrichtung stehend auf einer ersten Fördereinrichtung befördert und von dieser an eine zweite Fördereinrichtung übergeben, die der ersten Fördereinrichtung nachgeordnet ist. Die erste Fördereinrichtung kann bspw. durch ein Förderband, ein Gurtband, eine Gliederkette o. dgl. gebildet sein, die eine horizontal fördernde Auflage- und Förderebene zur Verfügung stellt, auf der die einzelnen Gebinde nacheinander zur zweiten Fördereinrichtung transportiert und an diese übergeben werden.

Mittels der zweiten Fördereinrichtung werden die Gebinde klemmend an beiden gegenüber liegenden Längsseiten gehalten und über einen Ausschleusabschnitt befördert sowie anschließend an eine dritte Fördereinrichtung übergeben, wo die Gebinde in horizontaler Förderrichtung stehend zu weiteren Handhabungs-, Verpackungs- und/oder Fördereinrichtungen transportiert werden. Die zweite Fördereinrichtung transportiert die von der ersten Fördereinrichtung angelieferten Gebinde somit nicht mehr stehend, sondern fasst sie an beiden Längsseiten und transportiert sie klemmend, um sie über den Ausschleusabschnitt befördern zu können, der anstelle einer Auflageebene eine Auffang- oder Aufnahmeeinrichtung für auszuschleusende oder auszusondernde Gebinde zur Verfügung stellt. Nach Passieren des Ausschleusabschnittes werden die Gebinde entweder an die dritte Fördereinrichtung übergeben, wo sie wiederum stehend weitertransportiert werden, oder im Bereich des Ausschleusabschnittes aus dem regulären Transportweg ausgesondert, um bspw. fehlerhaft umreifte Gebinde oder solche Gebinde, bei denen die Behälter nicht in gewünschter Weise aneinander haften, auszusortieren und nicht an eine nachgeordnete Verpackungsmaschine zu übergeben.

Wenn im vorliegenden Zusammenhang von fehlerhaften Gebinden die Rede ist, so können dies einerseits Umreifungsgebinde sein, bei denen das Umreifungsband die Behälter nicht mit ausreichender Vorspannung zusammenhält, so dass der Gebindeverbund bspw. zu locker ist und sich bei nachfolgenden Transportphasen oder auch bei der Handhabung durch den Handel und/oder den Endkunden aufzulösen oder auseinanderzufallen droht. Ein fehlerhaftes Gebinde kann jedoch auch ein Klebeverbund sein, bei dem mehrere Behälter mit ihren Außenmantelflächen an definierten Kontaktstellen miteinander verklebt sind, wobei diese Klebeverbindungen bspw. zu schwach ausgebildet sind, so dass auch hier der Gebindeverbund zu locker oder unsicher sein kann und sich bei nachfolgenden Transportphasen oder auch bei der Handhabung durch den Handel und/oder den Endkunden aufzulösen oder auseinanderzufallen droht. Wahlweise können auch Kombinationen dieser Verbindungsarten gewählt werden, bspw. ein relativ schwacher Klebeverbund, bei dem die Behälter an Kontaktstellen aneinander haften, wonach ein zusätzliches Umreifungsband mit definierter Vorspannung aufgebracht oder ggf. auch zwei parallele Umreifungsbänder in unterschiedlichen Höhen um die Außenmantelflächen einer Behältergruppierung gespannt und fixiert werden. Alle diese genannten Gebindevarianten oder auch andere Verbindungsarten von Behältern können unter Umständen fehlerhaft sein oder bestimmte Mängel aufweisen, die sich in mangelnder Gebindefestigkeit oder mangelnder räumlicher Zuordnung der Behälter eines solchen Gebindes bemerkbar machen können.

Das erfindungsgemäße Verfahren sorgt dafür, dass die Gebinde in der zweiten Fördereinrichtung mittels der, die jeweils beförderten Gebinde beidseitig an ihren Längsseiten klemmenden Förder- und Zugmittelabschnitte über den unterhalb eines Förderniveaus befindlichen Ausschleusabschnitt hinweg und in Richtung der dritten Fördereinrichtung befördert werden. Der fragliche Förder- oder Transportabschnitt, in dem fehlerhafte Gebinde und/oder nicht einwandfrei zusammengehaltene und/oder aneinander haftende Artikel erkannt und/oder aus einem Förderstrom ausgeschleust werden sollen, kann sich bspw. zwischen einer Verpackungsmaschine und einer nachfolgenden Gruppierstation befinden, wobei der Förderstrom an Gebinden über die oben erwähnten Fördereinrichtungen geleitet wird.

Bei dem Verfahren werden die Gebinde im Bereich der zweiten Fördereinrichtung entweder direkt ausgeschleust oder sie werden in ihrer Anordnung zueinander und/oder hinsichtlich ihrer Außenabmessungen beeinflusst bzw. verändert, insbesondere bei fehlerhaften und/oder in ihrer Anordnung bzw. ihrer Außenabmessungen zu verändernder Gebindeformation. So kann prinzipiell ein an die zweite Fördereinrichtung übergebenes und durch wenigstens vier umreifte Artikel gebildetes Gebinde mittels in unterschiedlichen Antriebsgeschwindigkeiten fördernder Förder- und Zugmittelabschnitte von einer sog. Rechteckanordnung in eine Diagonalanordnung oder von einer Diagonalanordnung in eine Rechteckanordnung überführt werden. Eine Diagonalanordnung meint in diesem Zusammenhang eine hexagonal dichtere Packung der vorzugsweise zylindrisch geformten Behälter, die aufgrund ihrer Nachgiebigkeit und ihrer Elastizität von einer Anordnung in die andere verschoben werden können, auch wenn eine mit Vorspannung aufgebrachte und daher die Artikel in ihrer Lage zueinander stabilisierende Umreifung für einen gewissen Widerstand gegen solche Verschiebungen sorgt. Es sollte an dieser Stelle allerdings nicht unerwähnt bleiben, dass sich eine solche Umgruppierung der Behälter- oder Artikelanordnung von einer Rechteck- in eine Diagonalanordnung oder umgekehrt in der Praxis als aufwändig erweisen kann, da sich hierbei die Klemmbreite bzw. der Abstand der beiden parallel umlaufenden Riemenabschnitte um ca. 7% ändern müsste. Eine solche Abstandsdifferenz könnte bspw. durch federnde Spezialriemen oder durch spezielle Riemen mit sog. Förderlappen o. dgl. oder auch durch eine synchrone Klemmbreitenregelung ausgeglichen werden.

Gleichermaßen können Klebegebinde, bei denen die Klebestellen zwischen den Behältern noch nicht vollständig ausgehärtet sind und deshalb noch über eine gewisse Flexibilität verfügen, in ihrer räumlichen Zuordnung verändert werden, bspw. durch Verschiebung von einer Diagonalanordnung in eine Rechteckanordnung oder umgekehrt. Auch dies kann durch ausreichende Kräfteeinwirkung von außen mittels der fördernden Klemmförderer erfolgen, wie dies oben anhand von Umreifungsgebinden erläutert wird.

Während ihres Transports und ihrer Handhabung im Bereich der zweiten Fördereinrichtung kann vorgesehen sein, dass die wenigstens vier umreiften bzw. aneinander haftenden Artikel eines von einer Diagonalanordnung in eine Rechteckanordnung oder von einer Rechteckanordnung in eine Diagonalanordnung zu überführenden Gebindes in ihrer Lage zueinander mittels ungleichmäßig und/oder mit wechselnden Antriebsgeschwindigkeiten fördernde Förder- und Zugmittelabschnitte verändert werden. Im Bereich der zweiten Fördereinrichtung greifen die Riemenbänder bzw. Zugmittelabschnitte vorzugsweise nur im oberen Bereich der Artikel oder Behälter an, d.h. oberhalb einer ggf. vorhandenen Banderole. Da zudem vorzugsweise jede Riemenstation bzw. jedes der beiden endlos umlaufenden Zugmittelantriebe mit einem eigenen Antrieb ausgestattet ist, können zwischen jeweils einer linken und rechten Riemenstation variierende und jeweils unterschiedliche Antriebsgeschwindigkeiten eingestellt werden, die aufgrund ihres schnellen Wechsels ein Zerfallen von losen Gebinden oder nicht umreiften Gebinden begünstigen können. Gleiches gilt bei nicht ausreichender Festigkeit von optional vorhandenen Klebeverbindungen zwischen den Artikeln oder Behältern eines Klebegebindes. Ein solches Klebegebinde kann ebenfalls zum Zerfallen bzw. Auseinanderfallen gebracht werden, wenn die Zugmittelantriebe jeweils in unterschiedlichen und/oder variierenden Vorschubgeschwindigkeiten laufen.

Erfindungsgemäßsielt das Verfahren auch vor, dass ein als fehlerhaft erkanntes und/oder lockeres und/oder loses Gebinde im Bereich der zweiten Fördereinrichtung nach unten in den Ausschleusabschnitt ausgeschleust, insbesondere nach unten ausgeworfen bzw. fallengelassen wird. Grundsätzlich dient das beschriebene Verfahren auch dazu, Gebinde mit fehlender Banderole und/oder fehlender Umreifung zu erkennen und im Bereich der zweiten Fördereinrichtung aus dem Förderstrom auszuschleusen bzw. nach unten auszuwerfen. Um eine solche Abgabe eines Gebindes aus dem Förderstrom in den Ausschleusabschnitt zu erreichen, kann bspw. ein Abstand der parallelen Förder- und Zugmittelabschnitte der zweiten Fördereinrichtung zur Ausschleusung eines Gebindes zumindest temporär und/oder im Bereich jeweils gegenüber liegender Umlenkrollen vergrößert werden. Die mit der zweiten Fördereinrichtung klemmend beförderten Gebinde können problemlos nach unten in den Ausschleusabschnitt abgegeben werden, wenn die Klemmwirkung kurzzeitig aufgehoben wird, bspw. indem der Abstand der beiden parallelen Zugmittel- und Förderantriebe vergrößert wird. Eine solche Abstandsvergrößerung kann wahlweise durch paralleles Auseinanderfahren der beiden Zugmittelantriebe oder durch einseitiges Auseinanderfahren im Bereich ihrer hinteren, näher am dritten Förderabschnitt befindlichen Umlenk- oder Antriebsrollen hergestellt werden. Zudem kann eine solche Abstandsvergrößerung wahlweise auch durch einseitiges Auseinanderfahren im Bereich ihrer vorderen, näher am ersten Förderabschnitt befindlichen Umlenk- oder Antriebsrollen hergestellt werden.

Generell kann jedoch bereits die klemmende und einen Reibschluss erzeugende Fixierung der Gebinde an deren Längsseiten dafür sorgen, dass unzureichend vorgespannte Umreifungsbänder die Behälter nicht mehr an ihrer Position halten können, so dass die Gebindestabilität beeinträchtigt ist, was wiederum dafür sorgt, dass die Klemmkraft aufgrund der ausweichenden Behälter reduziert ist, so dass sich einzelne Behälter aus dem Gebindeverbund lösen und nach unten in den Ausschleusabschnitt fallen. Gleiches gilt grundsätzlich bei nicht ausreichender Klebekraft aneinander geklebter Behälter eines Klebegebindes. Spätestens nach einem solchen Teilverlust einzelner Behälter eines vorher kompletten Gebindes kann auch das Restgebinde in aller Regel nicht mehr von den beiden Förder- und Zugmittelabschnitten geklemmt und gehalten werden, so dass es nach unten fällt und aus dem Förderstrom ausgesondert wird. Um den gewünschten Aussonderungseffekt zu erreichen, ist somit nicht zwingend eine aktive Beeinflussung der Transportparameter der zweiten Fördereinrichtung erforderlich, bspw. durch Abstandsvergrößerung der parallel umlaufenden Bänder und/oder durch voneinander abweichende Geschwindigkeitsvariationen der Bänder o. dgl. Maßnahmen, was im weitesten Sinne eine aktive Steuerung des Ausschleusvorganges bedeuten würde. Je nach Fördergeschwindigkeit, Abständen der in horizontaler Richtung hintereinander transportierten Gebinde voneinander und/oder der Länge des Teilabschnittes der zweiten Fördereinrichtung kann es vielmehr genügen, durch die passiv wirkenden Maßnahmen der durch mangelnden Zusammenhalt der Behälter innerhalb eines fehlerhaften Gebindes verursachten reduzierten Klemmkraft der das Gebinde klemmend fördernden Zugmittelabschnitte diese als fehlerhaft erkannten Gebinde auszuschleusen und auszusondern, indem sie ohne aktive Eingriffe nach unten fallen gelassen werden.

Zur weiteren Unterstützung der effektiven Ausschleusung fehlerhafter oder als fehlerhaft eingestufter Gebinde kann das Verfahren zusätzlich vorsehen, dass der Transportabschnitt zumindest im Bereich der zweiten Fördereinrichtung mittels optischer Sensoren oder optischer Erfassungseinrichtungen überwacht wird, wodurch fehlerhaft umreifte und/oder lockere und/oder lose Behälterzusammenstellungen, d.h. fehlerhafte Gebinde erkannt werden können. Auf Basis der ermittelten Sensorsignale und in Abhängigkeit von den Sensorwerten kann die relative Lage der parallelen Förder- und Zugmittelabschnitte zueinander gesteuert werden, um als fehlerhaft erkannte Gebinde auszuschleusen, wie dies anhand der verschiedenen Möglichkeiten, die Klemmwirkung für die beförderten Gebinde kurzzeitig aufzuheben, oben näher beschrieben wurde. Alternativ oder zusätzlich kann zudem bei entsprechenden Sensorsignalen ein Geschwindigkeitsprofil der beiden parallelen Zugmittelabschnitte in einer Weise variiert werden, dass die Gebinde destabilisiert werden, so dass unzureichend vorgespannte Gebinde oder instabile Behälteranordnungen oder solche Gebinde mit nicht ausreichender Klebekraft zwischen aneinandergeklebten Behältern von sich aus zerfallen und ggf. unter Herauslösung einzelner Behälter nach unten ausgeschleust werden.

Zur Erreichung des oben genannten Ziels schlägt die Erfindung weiterhin eine Förder- und Handhabungsvorrichtung für Gebinde mit wenigstens zwei Artikeln vor, die mittels wenigstens eines Umreifungsbandes oder auf sonstige Weise aneinander haftend, bzw. durch Klebeverbindungen, zusammengehalten sind. Die erfindungsgemäße Vorrichtung umfasst eine erste Fördereinrichtung zum stehenden Transport der Gebinde in horizontaler Förderrichtung, eine dieser nachgeordnete zweite Fördereinrichtung zum klemmenden Transport der Gebinde an dessen beiden gegenüber liegenden Längsseiten mittels umlaufender Förder- und Zugmittelabschnitte über einen Ausschleusabschnitt sowie eine der zweiten Fördereinrichtung nachgeordnete dritte Fördereinrichtung zum stehenden Transport der Gebinde in horizontaler Fördereinrichtung und zu deren Übergabe an weitere Handhabungs-, Verpackungs- und/oder Fördereinrichtungen.

Die erfindungsgemäße Förder- und Handhabungsvorrichtung ist zur Förderung und/oder Handhabung einer Vielzahl von transportierten Gebinden vorgesehen und vorbereitet, bei welchen die wenigstens zwei Artikel oder Behälter jedes Gebindes mittels wenigstens eines Umreifungsbandes und/oder mittels wenigstens einer Klebestelle zusammengehalten sind.

Die Förder- und Zugmittelabschnitte der zweiten Fördereinrichtung der erfindungsgemäßen Förder- und Handhabungsvorrichtung sind in voneinander differierenden Antriebsgeschwindigkeiten antreibbar. Dies kann bspw. der Überführung der aus wenigstens vier umreiften Artikeln gebildeten Gebinde von einer Rechteckanordnung in eine Diagonalanordnung oder von einer Diagonalanordnung in eine Rechteckanordnung dienen. Um diese Geschwindigkeitsdifferenzen zwischen den beiden Antrieben zu ermöglichen, ist jede Riemenstation bzw. jeder der beiden Förder- und Zugmittelabschnitte mit einem eigenen Antrieb ausgestattet. Dadurch ist es möglich, dass zwischen jeweils einer linken und rechten Riemenstation ein beliebiges Relativ-Geschwindigkeitsprofil eingestellt werden kann, wodurch eine Destabilisierung von fehlerhaften Gebinden und insbesondere ein Zerfallen von losen oder nicht umreiften Gebinden begünstigt wird. Gleichermaßen können Klebegebinde, bei denen die Klebestellen zwischen den Behältern noch nicht vollständig ausgehärtet sind und deshalb noch über eine gewisse Flexibilität verfügen, in ihrer räumlichen Zuordnung verändert werden, bspw. durch Verschiebung von einer Diagonalanordnung in eine Rechteckanordnung oder umgekehrt. Auch dies kann durch ausreichende Kräfteeinwirkung von außen mittels der fördernden Klemmförderer erfolgen, wie dies oben anhand von Umreifungsgebinden erläutert wird.

Erfindungsgemäß weist die Vorrichtung eine Einrichtung auf, mit deren Hilfe ein als fehlerhaft erkanntes und/oder lockeres und/oder loses Gebinde im Bereich der zweiten Fördereinrichtung nach unten in den Ausschleusabschnitt ausschleusbar und/oder auswerfbar ist. Zudem können die Antriebsgeschwindigkeiten der beiden parallelen Förderbänder variiert werden, vorzugsweise in jeweils unterschiedlicher Richtung, so dass bereits instabile Gebinde weiter destabilisiert werden und ausgeschleust werden können.

Zudem stellt es bei der erfindungsgemäßen Vorrichtung eine vorteilhafte Option dar, wenn zumindest der zweiten Fördereinrichtung wenigstens ein optischer Sensor zur Erkennung fehlerhaft umreifter und/oder lockerer und/oder loser Gebinde oder auch solcher Gebinde mit nicht ausreichend aneinander haftenden Behältern zugeordnet ist, so dass auf Basis der Sensorwerte dieses Sensors die relative Lage der parallelen Förder- und Zugmittelabschnitte zueinander steuerbar ist, um solche Gebinde ausschleusen zu können, die von den optischen Sensoren als fehlerhaft erkannt wurden und/oder die sich als von der zweiten Fördereinrichtung nicht optimal transportierbar erweisen, so dass zumindest einzelne Artikel in den Erfassungsbereich der optischen Sensoren geraten, wodurch wiederum ein Ausschleussignal an die zweite Fördereinrichtung übermittelt werden kann.

Die im Zusammenhang der vorliegenden Erfindung vorgeschlagene Vorrichtung kann sich bspw. zwischen einer Verpackungsmaschine und einer nachfolgenden geblockten Gruppierstation befinden und dient im Wesentlichen dazu, lose oder nicht umreifte Gebinde oder Gebinde mit nicht ausreichend aneinander haftenden Behältern auszuschleusen. Hierfür enthält die Vorrichtung in einem definierten Förderabschnitt seitlich angeordnete Riemenstationen, die über einen Form- oder Reibschluss die zu transportierenden und/oder auszuschleusenden Artikel bzw. Gebinde von einem vorgeordneten Transportband aufnehmen. Im Bereich der Riemenstation hängen die Gebinde frei und werden nur durch die seitliche Anpresskraft der Riemenbänder gehalten. Bedingt durch die Anpresskraft der Riemenstation können Behälter eines lose oder nicht umreiften Gebindes oder eines Gebindes mit nicht in gewünschter Weise aneinander haftenden Behältern in oder gegen die Laufrichtung ausweichen, wodurch das Gebinde zerfällt und die Behälter in einen Auswurfschacht o. dgl. fallen. Dieser Auswurfschacht wird im vorliegenden Zusammenhang auch allgemein als Ausschleusabschnitt bezeichnet. Bei normal geformten, weitgehend zylindrischen Behältern ist es im Bereich des Förderabschnittes für die Funktion entscheidend, dass die Riemenbänder nur im oberen Bereich der Behälter, d.h. auch oberhalb einer evtl. vorhandenen Banderole angreifen. Des Weiteren ist jede Riemenstation mit einem eigenen Antrieb ausgestattet. Dadurch ist es möglich, dass zwischen jeweils einer linken und rechten Riemenstation ein beliebiges Relativ-Geschwindigkeitsprofil eingestellt werden kann, welches ein Zerfallen von nur lose umreiften oder nicht umreiften Gebinden begünstigt. Auch wird dadurch ein Zerfallen von Gebinden begünstigt, bei denen die Behälter nicht ausreichend aneinander haften, bspw. wegen fehlerhafter Klebeverbindungen zwischen aneinander grenzenden Behältern. Grundsätzlich ist es jedoch nicht zwingend, dass die Riemenbänder nur im oberen Bereich der Behälter angreifen, da es auch manche Behälter gibt, die über einen weiteren Bereich konisch geformt sind und sich typischerweise nach oben hin verjüngen. Sofern bei diesen Behältern das Problem der stabilen Umreifung gelöst ist, kann es auch sinnvoll sein, wenn die Riemen bei solchen Umreifungsgebinden in tieferen Behälterabschnitten angreifen, bspw. in solchen Bereichen, wo die Behälter annähernd zylindrische Außenmantelflächenabschnitte aufweisen.

Eine optionale Ausleitung des jeweils parallel zum Schlechtgebinde stehenden Gutgebindes ist folgendermaßen denkbar: ein nach unten zerfallendes Schlechtgebinde wird durch einen Sensor erkannt, wodurch die Riemenstation des nebenstehenden Gutgebindes mittels Zylinder o.ä. geöffnet wird. Alternativ zu umreiften Gebinden könnte die Vorrichtung auch zur Ausschleusung von andersartigen Gebindetypen wie z.B. Klebegebinden dienen.

Des Weiteren könnte die Vorrichtung für eine rechtwinkelige Ausrichtung von banderolierten und ggfs. rautenförmigen Gebinden benutzt werden. Hierfür befindet sich z.B. eine Sensorleiste parallel zur Riemenstation, die kontinuierlich Gebindevorder- und Hinterkante misst und per Regelung der Riemenantriebe für eine Gebindeausrichtung sorgt.

Die Vorteile der Erfindung liegen insbesondere darin, dass es sich um ein im Wesentlichen passives System handelt. Für die primäre Aufgabe der "Schlechtgebinde"-Erkennung und/oder -Ausleitung sind grundsätzlich weder Sensoren noch nachgeordnete Auswerteschaltungen oder Aktoren zum Eingriff in einen Förderstrom erforderlich.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in zwei schematischen Seitenansichten zwei aufeinander folgende Prozessphasen der horizontalen Förderung von Gebinden innerhalb eines definierten Transportabschnittes einer Förder- und Handhabungsvorrichtung.
Fig. 2 zeigt eine schematische Draufsicht des Transportabschnittes, in dem Gebinde in Rechteckanordnung befördert werden.
Fig. 3 zeigt eine schematische Draufsicht des Transportabschnittes, in dem Gebinde in Diagonalanordnung befördert werden.
Fig. 4 zeigt in insgesamt sechs schematischen Seitenansichten aufeinander folgende Prozessphasen der horizontalen Förderung von Gebinden innerhalb des Transportabschnittes, wobei ein fehlerhaftes Gebinde aus einem Förderstrom ausgeschleust wird.
Fig. 5 zeigt in insgesamt vier schematischen Seitenansichten aufeinander folgende Prozessphasen der horizontalen Förderung von Gebinden innerhalb des Transportabschnittes, wobei ein fehlerhaftes Gebinde mit fehlender Umreifung aus dem Förderstrom ausgeschleust wird.
Fig. 6 zeigt in insgesamt sechs schematischen Seitenansichten aufeinander folgende Prozessphasen der horizontalen Förderung von Gebinden innerhalb des Transportabschnittes, wobei ein fehlerhaftes Gebinde aus einem Förderstrom ausgeschleust wird.
Fig. 7a zeigt eine schematische Draufsicht des Transportabschnittes, in dem Gebinde in Rechteckanordnung befördert und dabei in eine Diagonalanordnung verschoben werden.
Fig. 7b zeigt eine schematische Draufsicht des Transportabschnittes, in dem Gebinde in Diagonalanordnung befördert und dabei in eine Rechteckanordnung verschoben werden.
Fig. 8a zeigt eine schematische Seitenansicht des Transportabschnittes, der mit einer ersten Variante eines optischen Sensors ausgestattet ist.
Fig. 8b zeigt eine schematische Draufsicht des Transportabschnittes gemäß Fig. 8a, der zwei parallele Förderspuren aufweist.
Fig. 9a zeigt eine schematische Seitenansicht des Transportabschnittes, der mit einer weiteren Variante eines optischen Sensors ausgestattet ist.
Fig. 9b zeigt eine schematische Draufsicht des Transportabschnittes gemäß Fig. 9a, der zwei parallele Förderspuren aufweist.
Fig. 10 zeigt eine schematische Draufsicht des Transportabschnittes, bei dem fehlerhafte Gebinde mittels einer ersten Variante eines steuerbaren Förderabschnittes aktiv auswerfbar sind.
Fig. 11 zeigt eine schematische Draufsicht des Transportabschnittes, bei dem fehlerhafte Gebinde mittels einer zweiten Variante des steuerbaren Förderabschnittes aktiv auswerfbar sind.

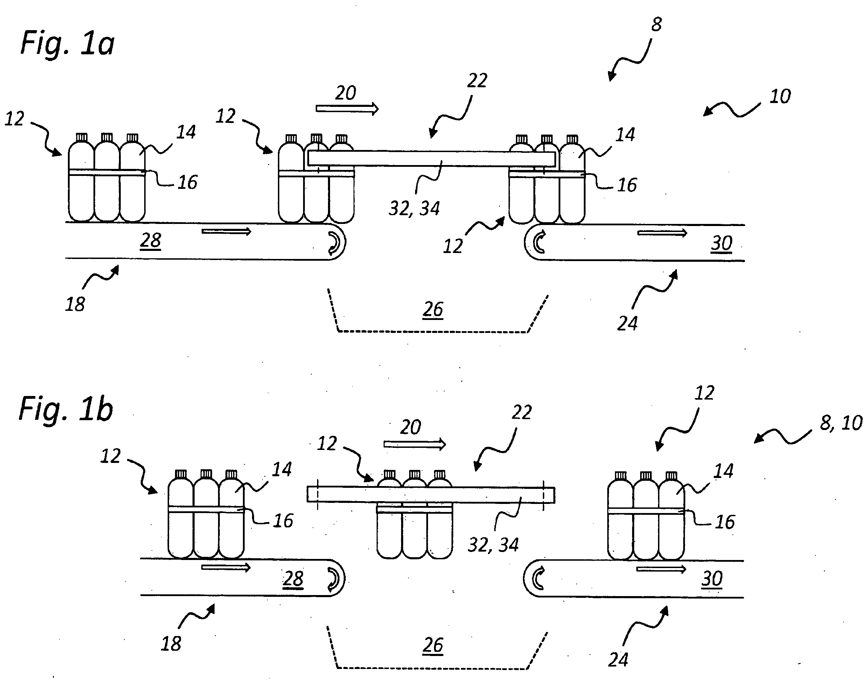

Für gleiche oder gleich wirkende Elemente der Erfindung werden in den Figuren 1 bis 11 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die Darstellungen der Fig. 1 zeigen in zwei schematischen Ansichten einen Transportabschnitt 10 zur horizontalen Förderung und Handhabung von Gebinden 12, die im gezeigten Ausführungsbeispiel durch insgesamt sechs Flüssigkeitsbehälter 14 aus Kunststoff gebildet sind, die durch ein horizontal um die Behälter gespanntes Umreifungsband 16 zusammengehalten und zum Gebinde 12 zusammengefasst sind.

Rein vorsorglich sei an dieser Stelle darauf hingewiesen, dass sich das nachfolgend beschriebene Verfahren nicht nur auf die beispielhaft gezeigten Umreifungsgebinde 12 anwenden lässt, sondern gleichermaßen auf anders zusammengestellte Gebinde 12, bspw. auf sog. Klebegebinde. Wenn also im vorliegenden Zusammenhang von fehlerhaften Gebinden 12 die Rede ist, so können dies einerseits Umreifungsgebinde 12 sein, bei denen das Umreifungsband 16 die Behälter 14 nicht mit ausreichender Vorspannung zusammenhält, so dass der Gebindeverbund bspw. zu locker ist und sich bei nachfolgenden Transportphasen oder auch bei der Handhabung durch den Handel und/oder den Endkunden aufzulösen oder auseinanderzufallen droht. Ein fehlerhaftes Gebinde 12 kann jedoch ebenso ein Klebeverbund sein, bei dem mehrere Behälter 14 mit ihren Außenmantelflächen an definierten Kontaktstellen miteinander verklebt sind, wobei diese Klebeverbindungen bspw. zu schwach ausgebildet sind, so dass auch hier der Gebindeverbund zu locker oder unsicher sein kann und sich bei nachfolgenden Transportphasen oder auch bei der Handhabung durch den Handel und/oder den Endkunden aufzulösen oder auseinanderzufallen droht. Wahlweise können auch Kombinationen dieser Verbindungsarten gewählt werden, bspw. ein relativ schwacher Klebeverbund, bei dem die Behälter 14 an Kontaktstellen aneinander haften, wonach ein zusätzliches Umreifungsband 16 mit definierter Vorspannung aufgebracht oder ggf. auch zwei parallele Umreifungsbänder 16 in unterschiedlichen Höhen um die Außenmantelflächen einer Behältergruppierung gespannt und fixiert werden. Alle diese genannten Gebindevarianten oder auch andere Verbindungsarten von Behältern 14 können unter Umständen fehlerhaft sein oder bestimmte Mängel aufweisen, die sich in mangelnder Gebindefestigkeit oder mangelnder räumlicher Zuordnung der Behälter 14 eines solchen Gebindes 12 bemerkbar machen können.

Der in der Fig. 1 ausschnittsweise gezeigte Transportabschnitt 10 bildet einen Teil einer Förder- und Handhabungsvorrichtung 8 für Gebinde 12 mit jeweils mehreren zusammengefassten Flüssigkeitsbehältern 14. Wie es die schematischen Seitenansichten der Fig. 1 a und der Fig. 1b verdeutlichen, umfasst die erfindungsgemäße Vorrichtung 8 eine erste Fördereinrichtung 18 zum stehenden Transport der Gebinde 12 in horizontaler Förderrichtung 20, eine dieser nachgeordnete zweite Fördereinrichtung 22 zum klemmenden Transport der Gebinde 12 über einen Teil des Transportabschnittes 10, der zwischen der ersten Fördereinrichtung 18 und einer der zweiten Fördereinrichtung 22 nachgeordneten dritten Fördereinrichtung 24 liegt. Auch die der zweiten Fördereinrichtung 22 nachgeordnete dritte Fördereinrichtung 24 befördert wie die erste Fördereinrichtung 18 die Gebinde 12 stehend in derselben Förderrichtung 20. Der weitere Transport der Gebinde 12 von der dritten Fördereinrichtung 24 an nachgeordnete weitere Handhabungs-, Verpackungs- und/oder Fördereinrichtungen ist in den Figuren 1a und 1b der Übersicht halber nicht gezeigt, zumal dieser weitere Transport keinen Einfluss auf die Handhabung der Gebinde 12 in der im vorliegenden Zusammenhang besonders interessierenden zweiten Fördereinrichtung 22 hat.

Sowohl die erste Fördereinrichtung 18 als auch die dritte Fördereinrichtung 24 sind im gezeigten Ausführungsbeispiel jeweils als stetig fördernde Horizontalfördereinrichtungen 28 und 30 ausgebildet, die insbesondere endlos umlaufende Zugmittel aufweisen können, deren Oberseite jeweils eine sich stetig in Förderrichtung 20 bewegende Auflageebene für die darauf stehend beförderten Gebinde 12 bildet. Solche endlos umlaufenden Zugmittel können bspw. Gurtbänder, Mattenbänder, Mattenketten oder sonstige Gliederbänder oder -gurte sein, die in den unterschiedlichsten Ausführungsvarianten für den gewünschten Zweck eingesetzt werden können.

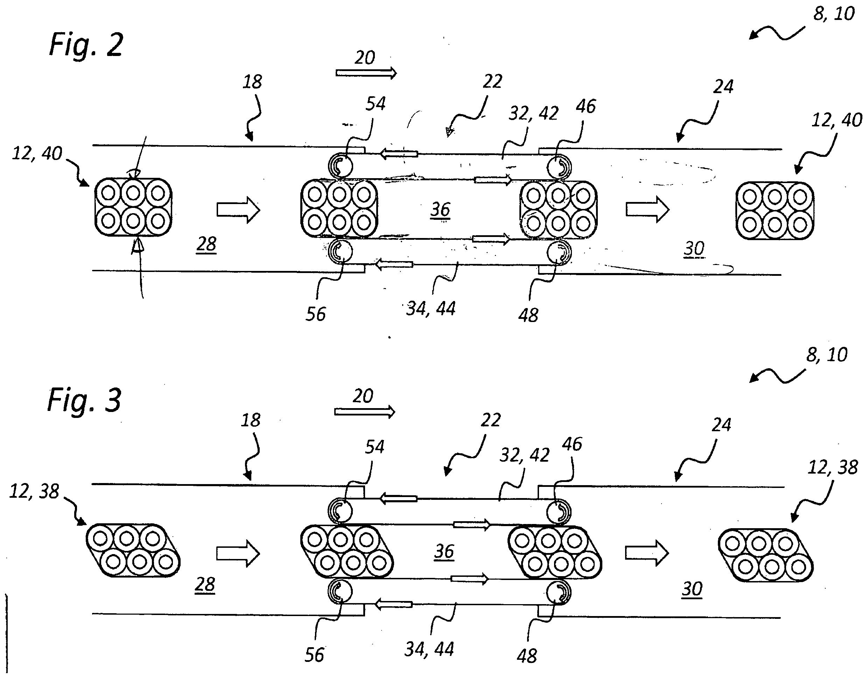

Im Unterschied hierzu ist die zweite Fördereinrichtung 22 durch ein Paar von parallel umlaufenden Förder- und Zugmittelabschnitten 32 und 34 gebildet, zwischen deren zueinander weisenden und sich normalerweise mit stetiger Geschwindigkeit in Förderrichtung 20 bewegenden Oberflächen ein Freiraum 36 gebildet ist (vgl. Fig. 2, Fig. 3), dessen Abmessungen in einer Größenordnung liegen, die ungefähr einer Breite eines zu fördernden Gebindes 12 entspricht, das zwischen den beiden in gleicher Richtung umlaufenden Zugmittelabschnitten 32 und 34 an seinen beiden vertikalen Längsseiten geklemmt und dadurch über einen Ausschleusabschnitt 26 hinweg zur dritten Fördereinrichtung 24 bewegt wird, sofern es sich um ein einwandfreies bzw. als einwandfrei erkanntes Gebinde 12 handelt, das nicht in den Ausschleusabschnitt 26 befördert werden und dadurch aus der regulären Transportfolge aufeinander folgender Gebinde 12 ausgesondert bzw. ausgeschleust werden soll.

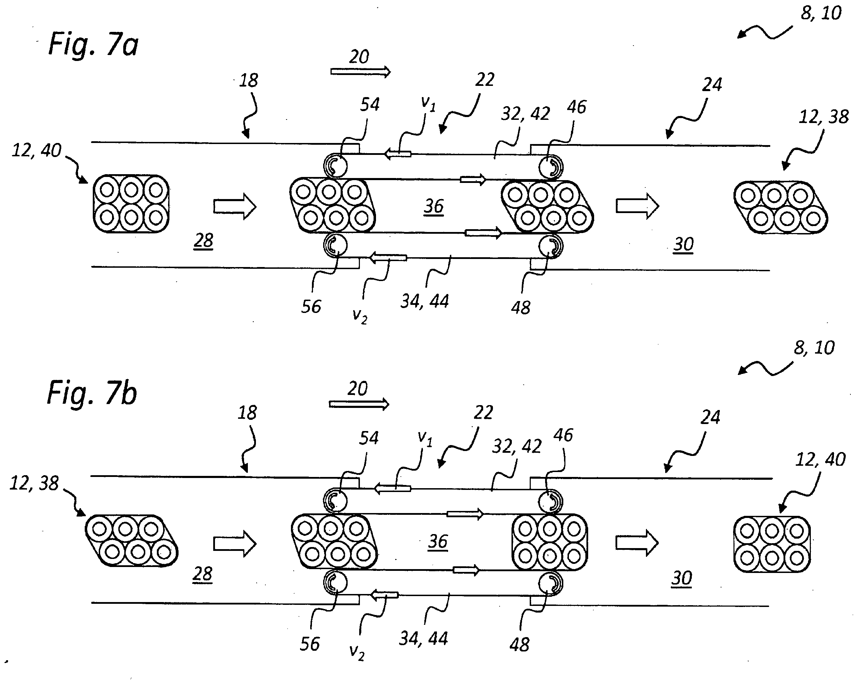

Wie erwähnt, ist dem Teil des Transportabschnittes 10, welcher der zweiten Fördereinrichtung 22 zugeordnet ist, der sog. Ausschleusabschnitt 26 zugeordnet, der mehrere unterschiedliche Aufgaben übernehmen kann. So dient dieser Ausschleusabschnitt 26 nicht nur der Aussonderung von als fehlerhaft erkannten und/oder nicht korrekt umreiften Gebinden 12, sondern gleichermaßen der Handhabung und Beeinflussung einzelner Gebinde 12, bspw. zu deren Umorientierung, Strukturverschiebung o. dgl., wie dies in den beiden schematischen Draufsichten der Fig. 7 angedeutet ist. Deshalb ist im vorliegenden Zusammenhang der Begriff des Ausschleusabschnittes 26 umfassender zu verstehen als sein durch den Wortsinn vorgegebener engerer Begriffsinhalt, da dort Gebinde 12 nicht nur ausgeschleust, sondern je nach Bedarf wahlweise auch umorientiert bzw. in ihrer Struktur verschoben werden, bspw. von einer Diagonalanordnung 38 mit hexagonal dichter gepackten Flüssigkeitsbehältern 14 (vgl. Fig. 3) in eine Rechteckanordnung 40, bei der die Seitenkanten des Gebindes 12 jeweils in rechten Winkel zueinander stehen (vgl. Fig. 2), wie dies die Fig. 7 im Detail zeigt.

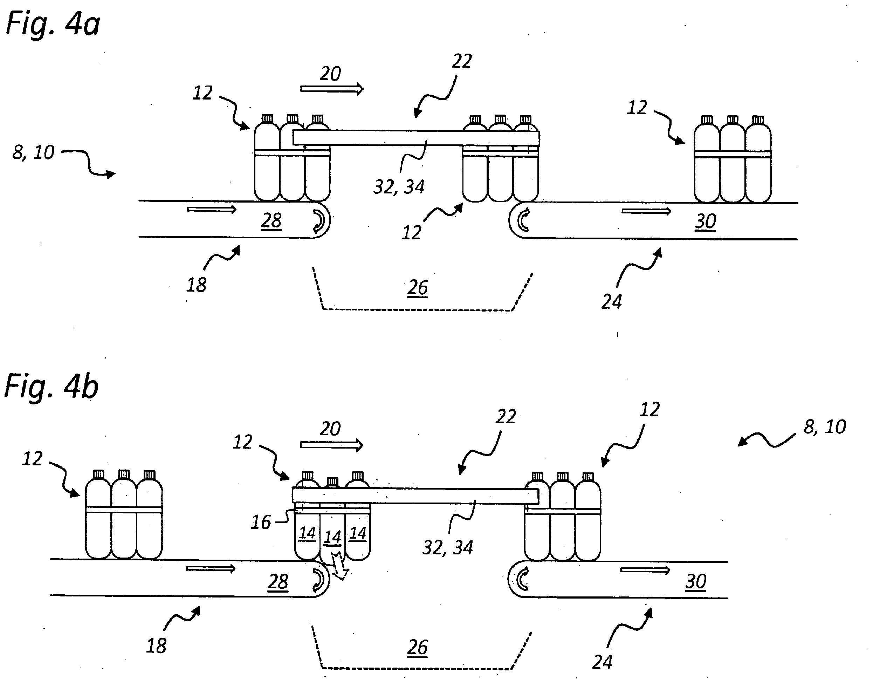

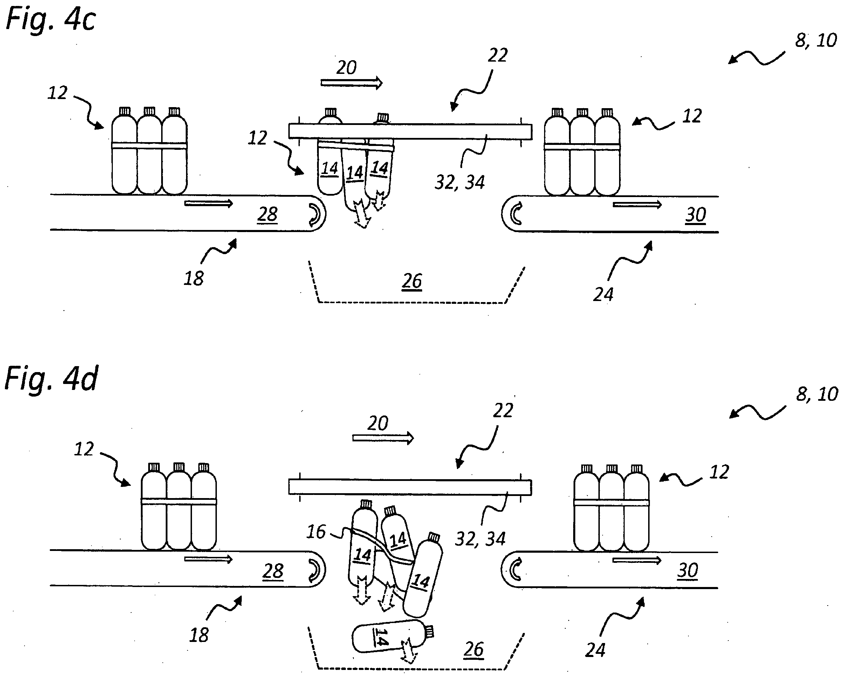

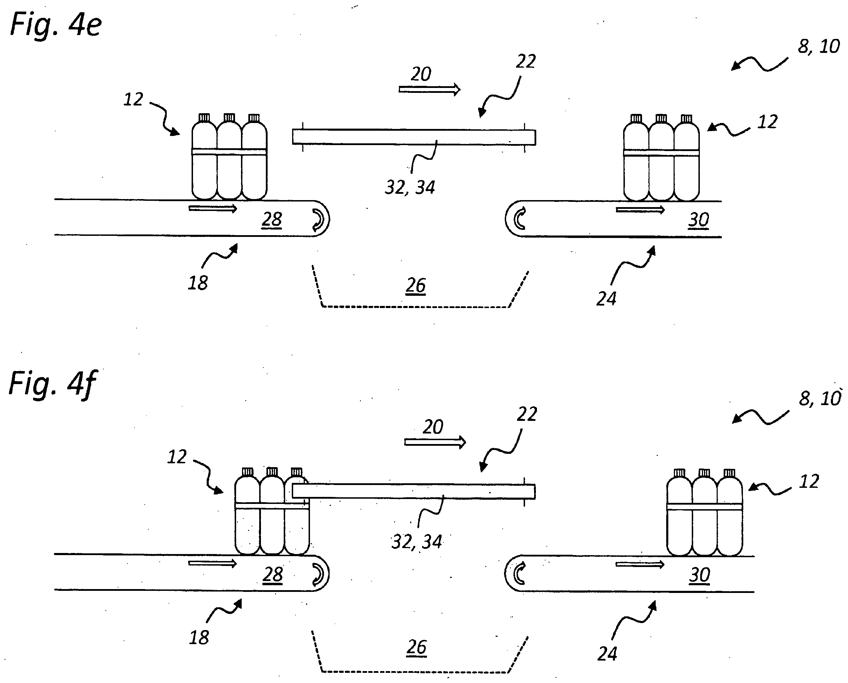

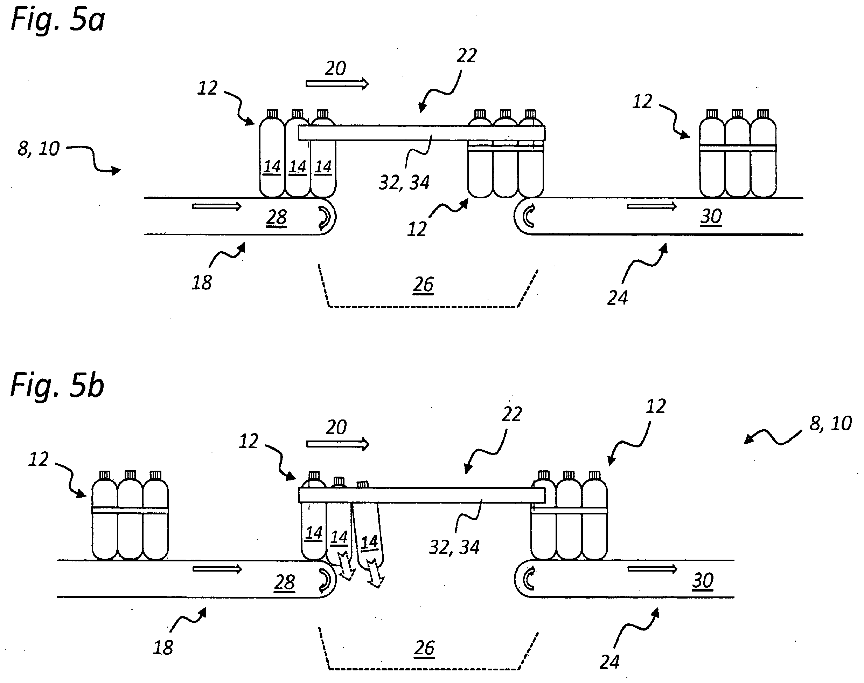

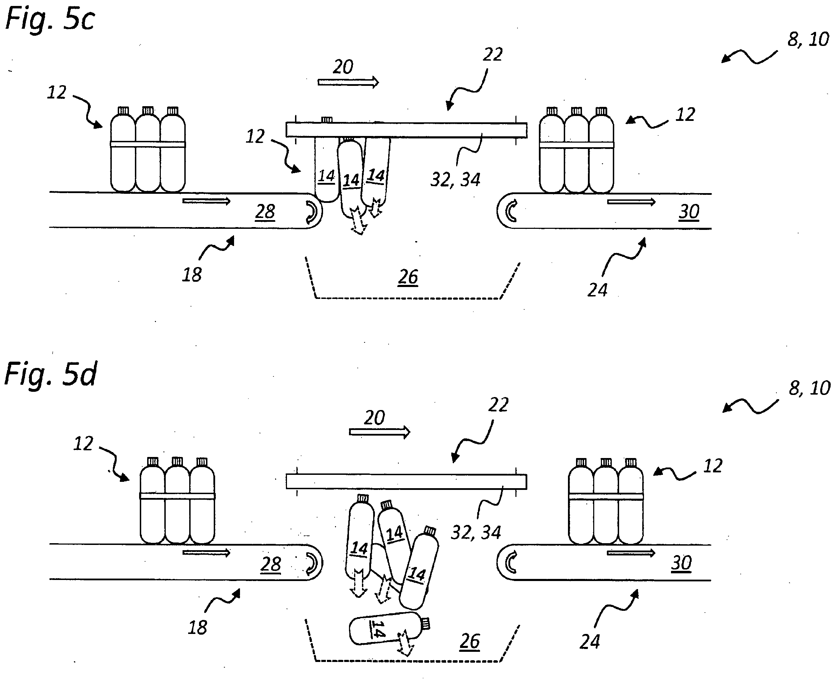

Die in Fig. 2 gezeigte Rechteckanordnung 40 kann wahlweise im Bereich der zweiten Fördereinrichtung 22 hergestellt werden (vgl. Fig. 7b), wonach die Gebinde 12 in dieser Formation 40 auf der dritten Fördereinrichtung 24 weitertransportiert werden können. Auch die in Fig. 3 gezeigte Diagonalanordnung 38 kann wahlweise im Bereich der zweiten Fördereinrichtung 22 hergestellt werden (vgl. Fig. 7a), wonach die Gebinde 12 in dieser Formation 38 auf der dritten Fördereinrichtung 24 weitertransportiert werden können. Wie es die schematischen Draufsichten der Figuren 2 und 3 erkennen lassen, werden die Gebinde 12 - ob in Rechteckanordnung 40 (Fig. 2) oder in Diagonalanordnung 38 (Fig. 3) - im Bereich der zweiten Fördereinrichtung 22 durch beidseitig klemmenden Kontakt der einen entsprechenden Freiraum 36 bildenden Förder- und Zugmittelabschnitt 32 und 34 in Förderrichtung 20 befördert. Jeder der beiden Förder- und Zugmittelabschnitte 32 und 34 umfasst einen endlos umlaufenden Antriebsriemen 42 bzw. 44, die jeweils über eigene steuerbare Antriebe verfügen, welche wiederum jeweils auf eine Antriebsrolle 46 bzw. 48 im Bereich einer 180-Grad-Umlenkung jedes Riemens 42 bzw. 44 wirken. Dadurch werden die Riemen 42 und 44 wahlweise mit identischen Umlaufgeschwindigkeiten angetrieben. Allerdings ist es auch möglich, zwischen der linken und rechten Riemenstation 42 und 44 ein definiertes Relativ-Geschwindigkeitsprofil einzustellen, wodurch einerseits eine Destabilisierung von fehlerhaften Gebinden 12 und insbesondere ein Zerfallen von losen oder nicht umreiften Gebinden 12 begünstigt wird (vgl. Figuren 4 und 5), und wodurch andererseits eine Verschiebung eines Diagonalgebindes 38 in ein Rechteckgebinde 40 oder umgekehrt ermöglicht ist, wie dies anhand der Fig. 7a und der Fig. 7b verdeutlicht wird.

An einer 180-Grad-Umlenkung laufen die Riemen 42 und 44 über die Antriebsrollen 46 bzw. 48, während an der anderen 180-Grad-Umlenkung jeweils Umlenkrollen 54 und 56 vorgesehen sind. Da sich die Rollen 46 und 54 sowie 48 und 56 jeweils in Fluchtung mit der Förderrichtung 20 befinden, wird auf die in der zweiten Fördereinrichtung 22 transportierten Gebinde 12 jeweils eine konstante Klemmkraft ausgeübt, bis die Gebinde 12 an die Horizontalfördereinrichtung 30 der dritten Fördereinrichtung 24 übergeben werden, wo sie stehend weiter transportiert werden.

Darüber hinaus ist es auch denkbar, die Klemmkraft zwischen den Riemen 42 und 44 in gewissen Grenzen variierbar zu gestalten, da diese bzw. ihre Umlenk- und Antriebsrollen wahlweise auch gefedert gelagert sein können, wobei die Federung vorzugsweise eine definierte Vorspannung aufweist, um die Klemmkraft weitgehend konstant bzw. innerhalb definierbarer Grenzen zu halten. Eine solche variable Vorspannung der Riemen 42 und 44 kann insbesondere für solche Konfigurationen von Vorteil sein, die in der Lage sein sollen, ein Rechteckgebinde 40 in ein Diagonalgebinde 38 zu überführen oder umgekehrt.

Wenn im Zusammenhang der Konfiguration der zweiten Fördereinrichtung 22 auch generell jeweils von einer 180-Grad-Umlenkung der Riemenabschnitte 42 und 44 an den Antriebsrollen 46 und 48 bzw. an den Umlenkrollen 54 und 56 die Rede ist, so ist dies lediglich beispielhaft zu verstehen, da eine solche Riemenführung den kürzesten Verlauf der Riemen 42 und 44 beschreibt. Das schließt jedoch keineswegs andere Riemenführungen aus, bei denen die einzelnen Riemen 42 und 44 bspw. in einer Dreiecksführung angeordnet und gelagert sein können, wobei es sinnvoll sein kann, vordere und hintere Umlenkrollen an den parallelen Riemenabschnitten zu verwenden und die Antriebsrollen jeweils dazwischen anzuordnen, so dass diese jeweils die Spitze eines von den Gebindeführungen abgewandten Dreiecks markieren. Damit soll gesagt sein, dass die Definition der 180-Grad-Umlenkung an den Umlenk- und/oder Antriebsrollen keinesfalls als entsprechende Einschränkung zu verstehen ist, sondern lediglich als beispielhafte Beschreibung der jeweiligen Ausführungsbeispiele.

Die in den Figuren 1a, 1b, 4a und 5a gezeigte Transportfolge verdeutlicht die störungsfreie Förderung von drei Gebinden 12 innerhalb des dargestellten Transportabschnittes 10 der erfindungsgemäßen Förder- und Handhabungsvorrichtung 8. So verdeutlicht die Fig. 1 a die Übergabe eines zuvorderst beförderten Gebindes 12 von der zweiten Fördereinrichtung 22 an die Horizontalfördereinrichtung 30 der dritten Fördereinrichtung 24, während ein nachfolgendes Gebinde 12 bereits im Begriff ist, von der Horizontalfördereinrichtung 28 der ersten Fördereinrichtung 18 an die zweite Fördereinrichtung 22 mit ihren endlos umlaufenden Riemenabschnitten 42 und 44 übergeben zu werden. Ein weiteres nachfolgendes Gebinde 12 wird in konstantem Abstand stehend auf der ersten Fördereinrichtung 18 befördert. Die Fig. 1b zeigt eine darauf folgende Beförderungsphase, bei der das zuvorderst beförderte Gebinde 12 bereits auf der dritten Fördereinrichtung 24 bewegt wird, während das nachfolgende Gebinde 12 durch die zweite Fördereinrichtung 22 mit ihren endlos umlaufenden Riemenabschnitten 42 und 44 über den Ausschleusabschnitt 26 hinweg befördert wird. Das weitere nachfolgende Gebinde 12, das auf der ersten Fördereinrichtung 18 bewegt wird, nähert sich in konstantem Abstand der zweiten Fördereinrichtung 22. Die Fig. 4a zeigt eine darauf folgende Beförderungsphase, bei der das zuvorderst beförderte Gebinde 12 weiterhin auf der dritten Fördereinrichtung 24 bewegt wird, während das nachfolgende Gebinde 12 im Begriff ist, von der zweiten Fördereinrichtung 22 mit ihren endlos umlaufenden Riemenabschnitten 42 und 44 an die dritte Fördereinrichtung 24 übergeben zu werden. Das weitere nachfolgende Gebinde 12, das noch auf der ersten Fördereinrichtung 18 bewegt wird, ist im Begriff, von der zweiten Fördereinrichtung 22 übernommen und über den Ausschleusabschnitt 26 hinweg befördert zu werden.

Die schematische Seitenansicht der Fig. 4b kann als Transportphase betrachtet werden, die der in Fig. 4a gezeigten Phase unmittelbar folgt. Bei dieser gezeigten Transportphase übernimmt die zweite Fördereinrichtung 22 ein nicht einwandfreies Gebinde 12, bei dem bspw. die Umreifung 16 über keine ausreichende Vorspannung verfügen kann, so dass die Artikel 14 dieses Gebindes 12 nur lose zusammengehalten sind und leicht gegeneinander verrutschen können. Die Fig. 4b deutet eine Situation an, bei der zumindest einer von mehreren Artikeln 14 des von der zweiten Fördereinrichtung 22 aufgenommenen und über die Förder- und Zugmittelabschnitte 32 und 34 beidseitig klemmend beförderten Gebindes 12 nach unten verrutscht, da ihm die unterstützende Auflagefläche der zuvor fördernden Horizontalfördereinrichtung 28 fehlt. Der nach unten verrutschende Artikel 14 strebt durch die Schwerkraft nach unten in Richtung zum Ausschleusabschnitt 26, der sich unterhalb des Förderniveaus der beiden Horizontalfördereinrichtungen 28 und 30 befindet.

Die schematische Seitenansicht der Fig. 4c verdeutlicht eine um einen geringen Zeitabschnitt folgende Transportphase, bei der die Artikel 14 des mit der zweiten Fördereinrichtung 22 beförderten, als fehlerhaft zu bezeichnenden Gebindes 12 bereits aufgrund des nach unten verrutschten Artikels 14 destabilisiert werden und in der Folge auseinander streben, wobei das Umreifungsband 16 keine weitere stabilisierende Funktion mehr bieten kann. Das Gebinde 12 beginnt einerseits in seine einzelnen Bestandteile zu zerfallen und rutscht dadurch andererseits nach unten aus dem klemmenden Zugriff der Förderbänder der zweiten Fördereinrichtung 22, da die nachgebenden und sich gegeneinander verschiebenden Artikel 14 des Gebindes 12 den Klemmkräften der Zugmittelabschnitte 32 und 34 keinen Widerstand mehr entgegensetzen können, wodurch der Reibschluss zwischen dem Gebinde 12 und den endlos umlaufenden Förderabschnitten 32 und 34 aufgehoben ist.

Die Fig. 4d verdeutlicht in einer weiteren Transportphase das Ergebnis dieses Zerfallsprozesses des entsprechenden Gebindes 12, das sich in alle Einzelteile auflösen und nach unten in den Ausschleusabschnitt 26 fallen kann. Sowohl die insgesamt sechs Artikel 14 als auch das lose gewordene Umreifungsband 16 werden aus dem Transportabschnitt 10 ausgesondert und landen im Ausschleusabschnitt 26, ohne dass hierzu irgendwelche Sensoren, Steuerungseinrichtungen, Aktoren o. dgl. Einrichtungen erforderlich wären. Es handelt sich bei der gezeigten Ausschleusung fehlerhafter Gebinde 12 um eine rein passive Maßnahme zur Aussonderung von fehlerhaften Gebinden 12, die nicht zusammen mit einwandfreien Gebinden 12 weiterbefördert und verpackt werden sollen.

Die Figuren 4e und 4f zeigen weitere folgende Transportphasen, bei denen aufgrund des ausgesonderten fehlerhaften Gebindes 12 (nicht dargestellt) der Abstand zwischen aufeinander folgenden Gebinden 12 deutlich vergrößert ist. Während in der Darstellung der Fig. 4e das zuvorderst transportierte Gebinde 12 in Förderrichtung 20 auf der dritten Fördereinrichtung 24 befördert wird, nähert sich das folgende Gebinde 12 erst der zweiten Fördereinrichtung 22. Die Darstellung der Fig. 4f zeigt die anschließende Übernahme des hinteren Gebindes 12 durch die zweite Fördereinrichtung 22.

In Abwandlung zur Fig. 4 verdeutlicht die Fig. 5a ein der Fig. 1b folgende Beförderungsphase, bei der das zuvorderst beförderte Gebinde 12 (vgl. Fig. 1a, Fig. 1 b) weiterhin auf der dritten Fördereinrichtung 24 bewegt wird, während das nachfolgende Gebinde 12 im Begriff ist, von der zweiten Fördereinrichtung 22 mit ihren endlos umlaufenden Riemenabschnitten 42 und 44 an die dritte Fördereinrichtung 24 übergeben zu werden. Das weitere nachfolgende Gebinde 12, das noch auf der ersten Fördereinrichtung 18 bewegt wird, ist im Begriff, von der zweiten Fördereinrichtung 22 übernommen und über den Ausschleusabschnitt 26 hinweg befördert zu werden. Da diesem Gebinde 12 jedoch das Umreifungsband 16 gänzlich fehlt, wurde es zwar auf der ersten Fördereinrichtung 18 problemlos befördert, kann jedoch von den Zugmittelabschnitten 32 und 34 der zweiten Fördereinrichtung 22 nicht mehr gehalten und geklemmt werden, so dass es dort in seine einzelnen Behälter 14 zerfällt und nach unten in den Ausschleusabschnitt 26 ausgegeben wird.

Die schematische Seitenansicht der Fig. 5b kann als Transportphase betrachtet werden, die der in Fig. 5a gezeigten Phase unmittelbar folgt. Bei dieser gezeigten Transportphase übernimmt die zweite Fördereinrichtung 22 das nicht einwandfreie Gebinde 12, bei dem die Umreifung 16 fehlt, so dass die Artikel 14 dieses Gebindes 12 nicht zusammengehalten sind und jederzeit gegeneinander verschoben werden oder völlig auseinander fallen können. Die Fig. 5b deutet eine Situation an, bei der bereits zwei von mehreren Artikeln 14 des von der zweiten Fördereinrichtung 22 aufgenommenen und über die Förder- und Zugmittelabschnitte 32 und 34 beidseitig klemmend beförderten Gebindes 12 nach unten verrutschen, da ihnen die unterstützende Auflagefläche der zuvor fördernden Horizontalfördereinrichtung 28 fehlen. Die verrutschenden Artikel 14 streben durch die Schwerkraft nach unten in Richtung zum Ausschleusabschnitt 26, der sich unterhalb des Förderniveaus der beiden Horizontalfördereinrichtungen 28 und 30 befindet.

Die schematische Seitenansicht der Fig. 5c verdeutlicht eine um einen geringen Zeitabschnitt folgende Transportphase, bei der die Artikel 14 des mit der zweiten Fördereinrichtung 22 beförderten, als fehlerhaft zu bezeichnenden Gebindes 12 bereits völlig destabilisiert werden und in der Folge auseinander streben, da ihnen die stabilisierende Wirkung des Umreifungsbandes 16 fehlt. Das Gebinde 12 beginnt einerseits in seine einzelnen Bestandteile zu zerfallen und rutscht dadurch andererseits nach unten aus dem klemmenden Zugriff der Förderbänder der zweiten Fördereinrichtung 22, da die nachgebenden und sich gegeneinander verschiebenden Artikel 14 des Gebindes 12 den Klemmkräften der Zugmittelabschnitte 32 und 34 keinen Widerstand mehr entgegensetzen können, wodurch der Reibschluss zwischen dem Gebinde 12 und den endlos umlaufenden Förderabschnitten 32 und 34 aufgehoben ist.

Streng genommen sollte in dem in Fig. 5 gezeigten Fall gar nicht von einem Gebinde 12 gesprochen werden, da aufgrund des fehlenden Umreifungsbandes 16 kein Gebindeverbund der zusammenstehenden Behälter 14 gegeben ist.

Die Fig. 5d verdeutlicht in einer weiteren Transportphase das Ergebnis dieses Zerfallsprozesses des entsprechenden Gebindes 12 bzw. der entsprechenden Behälterzusammenstellung, das/die sich in alle Einzelteile auflösen und nach unten in den Ausschleusabschnitt 26 fallen. Damit werden die insgesamt sechs Artikel 14 aus dem Transportabschnitt 10 ausgesondert und landen im Ausschleusabschnitt 26, ohne dass hierzu irgendwelche Sensoren, Steuerungseinrichtungen, Aktoren o. dgl. Einrichtungen erforderlich wären. Es handelt sich bei der gezeigten Ausschleusung fehlerhafter Gebinde 12 um eine rein passive Maßnahme zur Aussonderung von fehlerhaften Gebinden 12, die nicht zusammen mit einwandfreien Gebinden 12 weiterbefördert und verpackt werden sollen.

Zu den weiteren folgenden Transportphasen, bei denen aufgrund des ausgesonderten fehlerhaften Gebindes 12 der Abstand zwischen aufeinander folgenden Gebinden 12 deutlich vergrößert ist, sei auf die Figuren 4e und 4f verwiesen, die sich nicht von entsprechend an die Fig. 5d anschließenden Transportphasen unterscheiden.

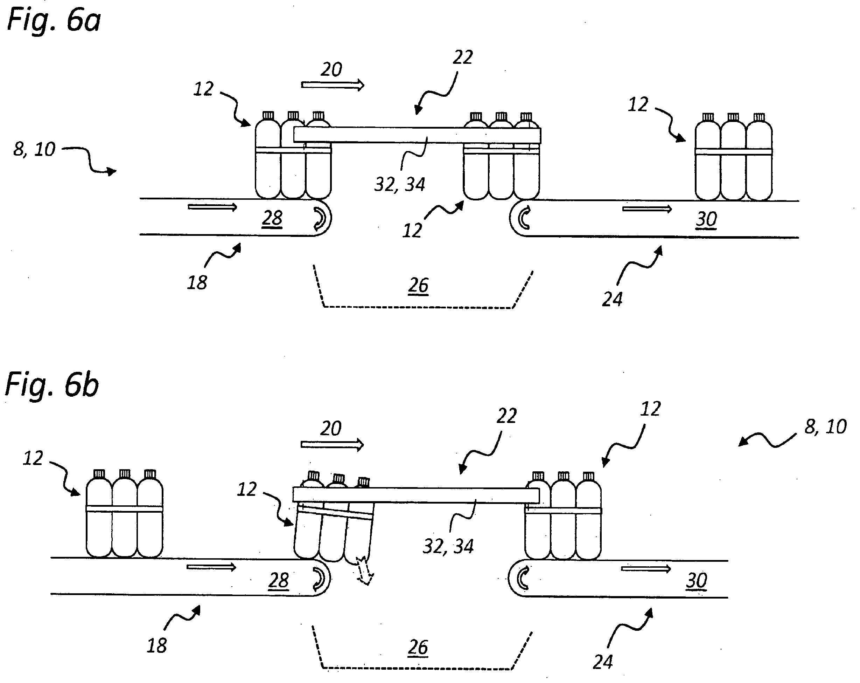

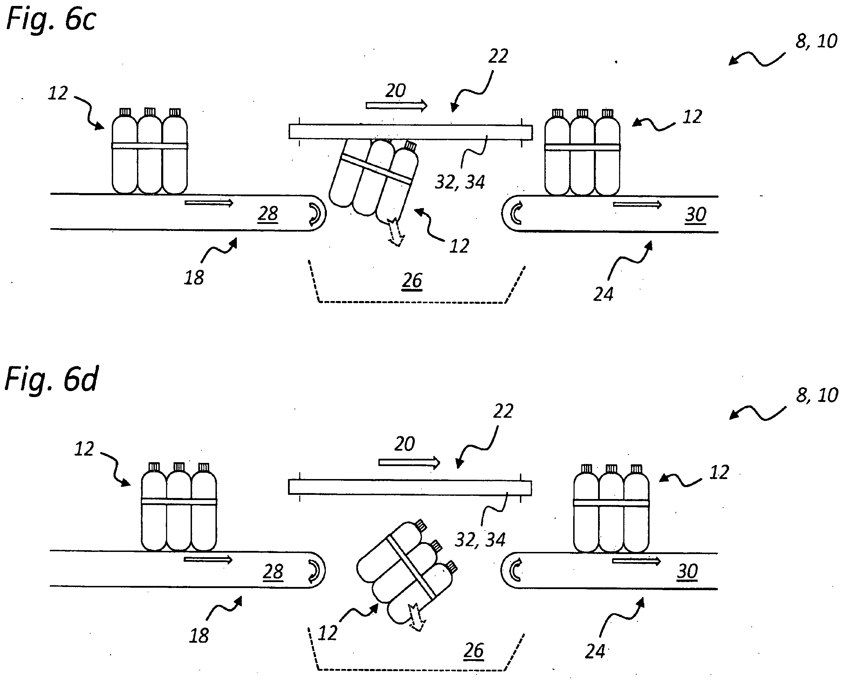

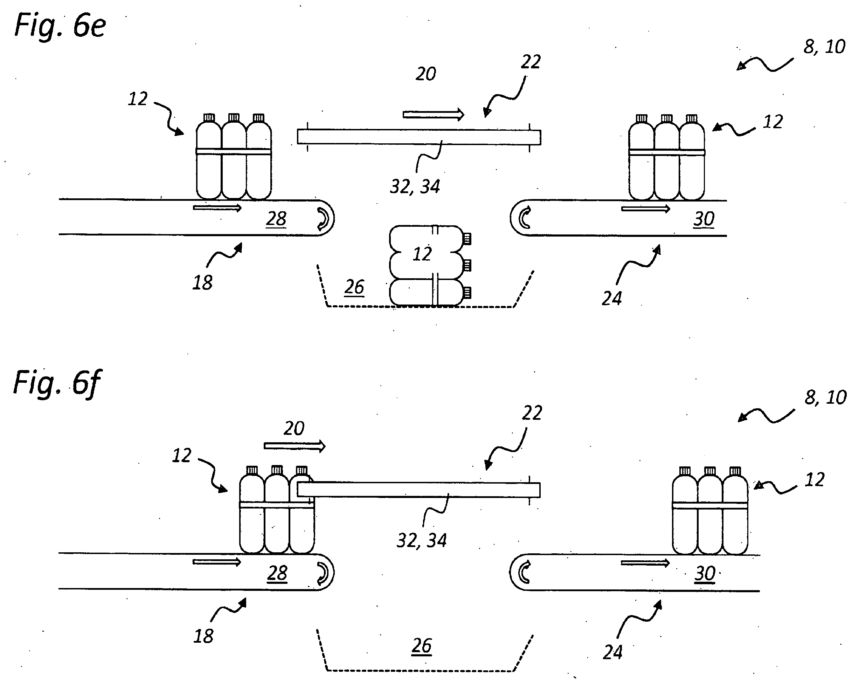

Die insgesamt sechs schematischen Darstellungen der Fig. 6 zeigen wiederum aufeinander folgende Transportphasen beim Transport von umreiften Gebinden 12 mittels der drei hintereinander angeordneten Fördereinrichtungen 18, 22 und 24. Die in Fig. 6a gezeigte Transportphase entspricht der in Fig. 4a gezeigten Phase, so dass auf die entsprechenden Erläuterungen zu dieser Darstellung verwiesen werden kann. Die schematische Seitenansicht der Fig. 6b kann als Transportphase betrachtet werden, die der in Fig. 6a gezeigten Phase unmittelbar folgt. Bei dieser gezeigten Transportphase übernimmt die zweite Fördereinrichtung 22 ein nicht einwandfreies Gebinde 12, bei dem zwar die Umreifung 16 ausreichend gespannt sein kann, wo aber die Artikel 14 dieses Gebindes 12 gegeneinander verschoben sein können, so dass seine Außenabmessungen gegenüber einwandfreien Gebinden 12 reduziert sind, was dazu führt, dass das gesamte Gebinde 12 nicht mit ausreichender Klemmkraft durch die zweite Fördereinrichtung 22 gehalten und transportiert werden kann. So deutet die Fig. 6b eine Situation an, bei der das gesamte von der zweiten Fördereinrichtung 22 aufgenommene und über die Förder- und Zugmittelabschnitte 32 und 34 beidseitig klemmend beförderte Gebinde 12 nach unten verrutscht, da ihm die unterstützende Auflagefläche der zuvor fördernden Horizontalfördereinrichtung 28 fehlt. Das nach unten verrutschende Gebinde 12 strebt durch die Schwerkraft nach unten in Richtung zum Ausschleusabschnitt 26, der sich unterhalb des Förderniveaus der beiden Horizontalfördereinrichtungen 28 und 30 befindet.

Die schematische Seitenansicht der Fig. 6c verdeutlicht eine um einen geringen Zeitabschnitt folgende Transportphase, bei der das mit der zweiten Fördereinrichtung 22 beförderte, als fehlerhaft zu bezeichnende Gebinde 12 bereits nahezu aus dem Eingriffsbereich der Förder- und Zugmittelabschnitte 32 und 34 der zweiten Fördereinrichtung 22 gerutscht ist. Das Gebinde 12 rutscht nach unten aus dem klemmenden Zugriff der Förderbänder der zweiten Fördereinrichtung 22 (vgl. Fig. 6d), da die nachgebenden und sich gegeneinander verschiebenden Artikel 14 des Gebindes 12 den Klemmkräften der Zugmittelabschnitte 32 und 34 keinen ausreichenden Widerstand entgegensetzen können, wodurch der Reibschluss zwischen dem Gebinde 12 und den endlos umlaufenden Förderabschnitten 32 und 34 aufgehoben ist. Das Gebinde 12 landet schließlich im Ausschleusabschnitt 26 (Fig. 6e), wobei es sich auch bei dieser gezeigten Ausschleusung fehlerhafter Gebinde 12 um eine rein passive Maßnahme zur Aussonderung von fehlerhaften Gebinden 12 handelt, die nicht zusammen mit einwandfreien Gebinden 12 weiterbefördert und verpackt werden sollen.

Die Figuren 6e und 6f zeigen aufeinander folgende Transportphasen, bei denen aufgrund des ausgesonderten fehlerhaften Gebindes 12 (Fig. 6e) der Abstand zwischen aufeinander folgenden Gebinden 12 deutlich vergrößert ist. Während in der Darstellung der Fig. 6e das zuvorderst transportierte Gebinde 12 in Förderrichtung 20 auf der dritten Fördereinrichtung 24 befördert wird, nähert sich das folgende Gebinde 12 erst der zweiten Fördereinrichtung 22. Die Darstellung der Fig. 6f zeigt die anschließende Übernahme des hinteren Gebindes 12 durch die zweite Fördereinrichtung 22.

Die beiden schematischen Draufsichten der Fig. 7 verdeutlichen die Varianten der Strukturbeeinflussung innerhalb der Gebinde 12, bei denen die Artikel 14 entweder von einer Rechteckanordnung 40 in eine Diagonalanordnung 38 gebracht werden (Fig. 7a) oder bei denen die Artikel von einer Diagonalanordnung 38 in eine Rechteckanordnung 40 gebracht werden (Fig. 7b). So kann die bereits in Fig. 2 gezeigte Rechteckanordnung 40 wahlweise im Bereich der zweiten Fördereinrichtung 22 hergestellt werden (vgl. Fig. 7b), wonach die Gebinde 12 in dieser Formation 40 auf der dritten Fördereinrichtung 24 weitertransportiert werden können. Auch die in Fig. 3 gezeigte Diagonalanordnung 38 kann wahlweise im Bereich der zweiten Fördereinrichtung 22 hergestellt werden (vgl. Fig. 7a), wonach die Gebinde 12 in dieser Formation 38 auf der dritten Fördereinrichtung 24 weitertransportiert werden können.

Um diese Struktur- und Formationsänderung in den umreiften Gebinden 12 durch Umgruppierung der mit dem Umreifungsband 16 zusammengehaltenen Artikel 14 herzustellen, können die Förder- und Zugmittelabschnitte 32 und 34 der zweiten Fördereinrichtung 22 jeweils in unterschiedlichen und/oder voneinander differierenden und/oder wechselnden Antriebsgeschwindigkeiten angetrieben werden. Um diese Geschwindigkeitsdifferenzen zwischen den beiden Antriebsriemen 42 und 44 der zweiten Fördereinrichtung 22 zu ermöglichen, ist jede Riemenstation 42 und 44 bzw. jeder der beiden Förder- und Zugmittelabschnitte 32 und 34 mit einem eigenen steuerbaren Antrieb ausgestattet, der jeweils auf eine Antriebsrolle 46 bzw. 48 im Bereich einer 180-Grad-Umlenkung jedes Riemens 42 bzw. 44 wirkt. Dadurch ist es möglich, zwischen der linken und rechten Riemenstation 42 und 44 ein nahezu beliebig voneinander abweichendes Geschwindigkeitsprofil einzustellen, wodurch einerseits eine Destabilisierung von fehlerhaften Gebinden 12 und insbesondere ein Zerfallen von losen oder nicht umreiften Gebinden 12 begünstigt wird, und wodurch andererseits eine Verschiebung eines Diagonalgebindes 38 in ein Rechteckgebinde 40 oder umgekehrt ermöglicht ist.

Zur gewählten Begrifflichkeit der 180-Grad-Umlenkung sei auf die oben gemachten Ausführungen verwiesen, die auch eine alternative Dreieckanordnung der Riemenlagerung als gleichwertig und gleichwirkend bezeichnen und erläutern.

Bei der in Fig. 7a gezeigten Verschiebung der Rechteckanordnung 40 des auf der ersten Fördereinrichtung 18 transportierten Gebindes 12 in eine Diagonalanordnung 38 zum weiteren Transport auf der dritten Fördereinrichtung ist es erforderlich, den in Förderrichtung 20 links befindlichen Antriebsriemen 42 des ersten Förder- und Zugmittelabschnittes 32 etwas langsamer anzutreiben als den temporär zu beschleunigenden rechten Antriebsriemen 44 des zweiten Förder- und Zugmittelabschnittes 34 der zweiten Fördereinrichtung 22, wodurch sich die jeweils rechten Artikel 14 leicht in Förderrichtung 20 nach vorne verschieben, so dass eine hexagonal dichtere Packung des Gebindes 12 und damit dessen Diagonalanordnung 38 erzielt wird. Der langsamer laufende erste Antriebsriemen 42 ist in Fig. 7a durch die etwas kürzeren Richtungspfeile und die damit gekennzeichnete geringere erste Geschwindigkeit v₁ bezeichnet, während der schneller laufende zweite Antriebsriemen 44 durch die etwas längeren Richtungspfeile und die damit gekennzeichnete erhöhte zweite Geschwindigkeit v₂ bezeichnet ist.

Bei der in Fig. 7b gezeigten Verschiebung der Diagonalanordnung 38 des auf der ersten Fördereinrichtung 18 transportierten Gebindes 12 in eine Rechteckanordnung 40 zum weiteren Transport auf der dritten Fördereinrichtung ist es erforderlich, den in Förderrichtung 20 links befindlichen Antriebsriemen 42 des ersten Förder- und Zugmittelabschnittes 32 etwas schneller anzutreiben als den temporär zu verzögernden rechten Antriebsriemen 44 des zweiten Förder- und Zugmittelabschnittes 34 der zweiten Fördereinrichtung 22, wodurch sich die jeweils linken Artikel 14 leicht in Förderrichtung 20 nach vorne verschieben, so dass die hexagonal dichtere Packung des Gebindes 12 aus ihrer Diagonalanordnung 38 in die Rechteckanordnung 40 verschoben wird. Der schneller laufende erste Antriebsriemen 42 ist in Fig. 7b durch die etwas längeren Richtungspfeile und die damit gekennzeichnete größere erste Geschwindigkeit v₁ bezeichnet, während der langsamer laufende zweite Antriebsriemen 44 durch die etwas kürzeren Richtungspfeile und die damit gekennzeichnete reduzierte zweite Geschwindigkeit v₂ bezeichnet ist.

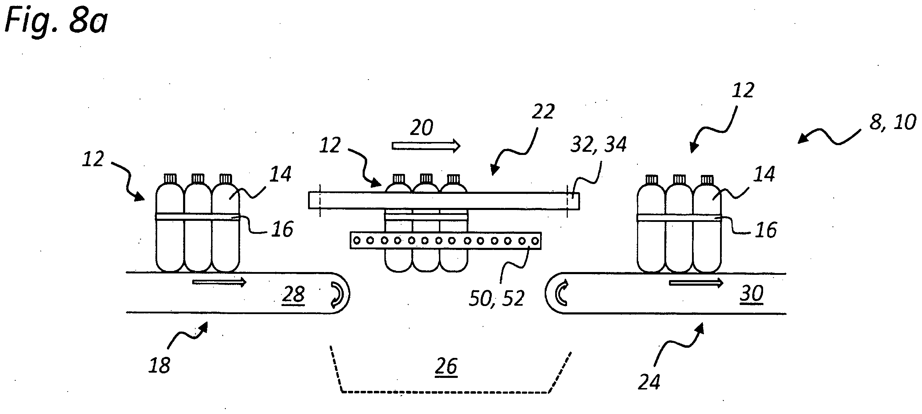

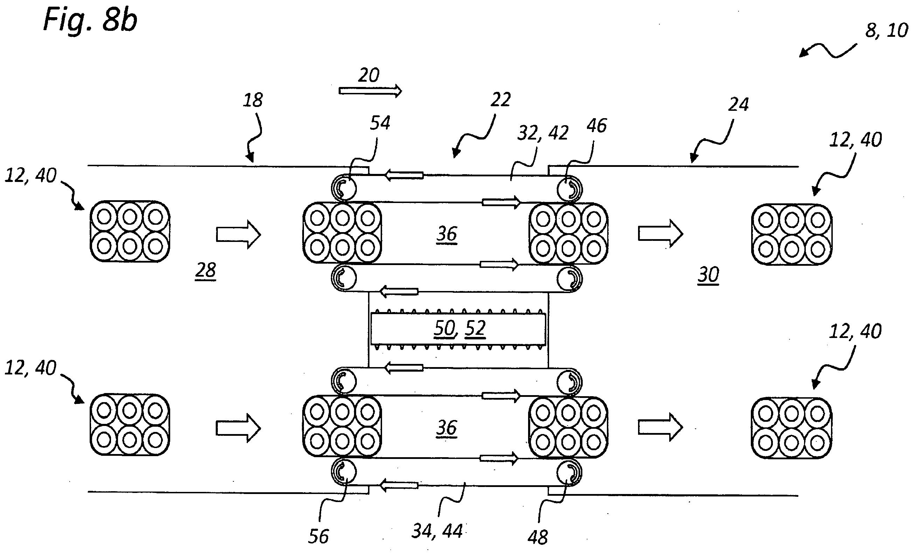

Wie es die Figuren 8a und 8b erkennen lassen, kann die erfindungsgemäße Förder- und Handhabungsvorrichtung 8 wahlweise eine optische Erfassungseinrichtung 50 aufweisen, mit deren Hilfe ein als fehlerhaft erkanntes und/oder lockeres und/oder loses Gebinde 12 im Bereich der zweiten Fördereinrichtung 22 identifiziert werden und nach unten in den Ausschleusabschnitt 26 ausgeschleust und/oder ausgeworfen werden kann. Eine solche optische Erfassungseinrichtung 50 kann gemäß Fig. 8 bspw. durch eine Lichtleiste 52 gebildet sein, die knapp oberhalb eines Förderniveaus der Horizontalfördereinrichtungen 28 und 30 angeordnet sein kann, so dass eine regelmäßige oder unregelmäßige Gebindeformatierung zuverlässig auf optischem Wege erfasst und als Sensorsignal an eine Steuereinrichtung zur Antriebs- und Bewegungssteuerung der Förder- und Zugmittelabschnitte 32 und 34 übermittelt werden kann. Diese Lichtleiste 52 weist vorzugsweise eine Länge auf, die zumindest dem Abstand zwischen der ersten und dritten Fördereinrichtung 18 und 24 entspricht, so dass weitgehend der gesamte Bereich der zweiten Fördereinrichtung 22, der sich zur Ausschleusung fehlerhafter Gebinde 12 eignet, optisch überwacht werden kann. Die Lichtleiste 52 der optischen Erfassungseinrichtung 50 kann sich gemäß Fig. 8b zwischen zwei parallelen Förderabschnitten mit jeweils gleich ausgebildeten zweiten Fördereinrichtungen 22 befinden, so dass beide Seiten erfasst werden können, insbesondere mittels einer Lichtschrankenanordnung und/oder durch Erfassung von Helligkeitswerten, Grauwerten oder anderen optisch auswertbaren Unterschieden in der Struktur, Anordnung und/oder Lage der mit den zweiten Fördereinrichtungen 22 beförderten Gebinde 12. Die erste Fördereinrichtung 18 weist in der gezeigten Anordnung der Fig. 8b eine relativ breite Horizontalfördereinrichtung 28 auf, so dass darauf mindestens zwei parallele Transportspuren mit in Förderrichtung 20 bewegten Gebinden 12 Platz finden. Gleiches gilt für die dritte Fördereinrichtung 24 mit ihrer entsprechend dimensionierten Horizontalfördereinrichtung 30.

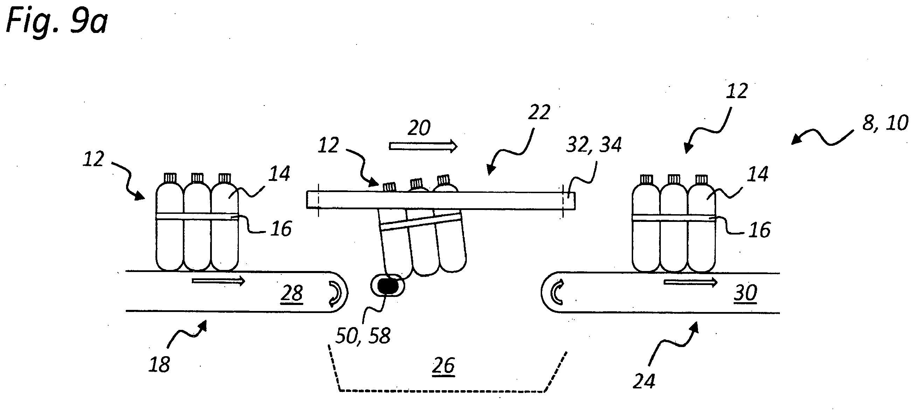

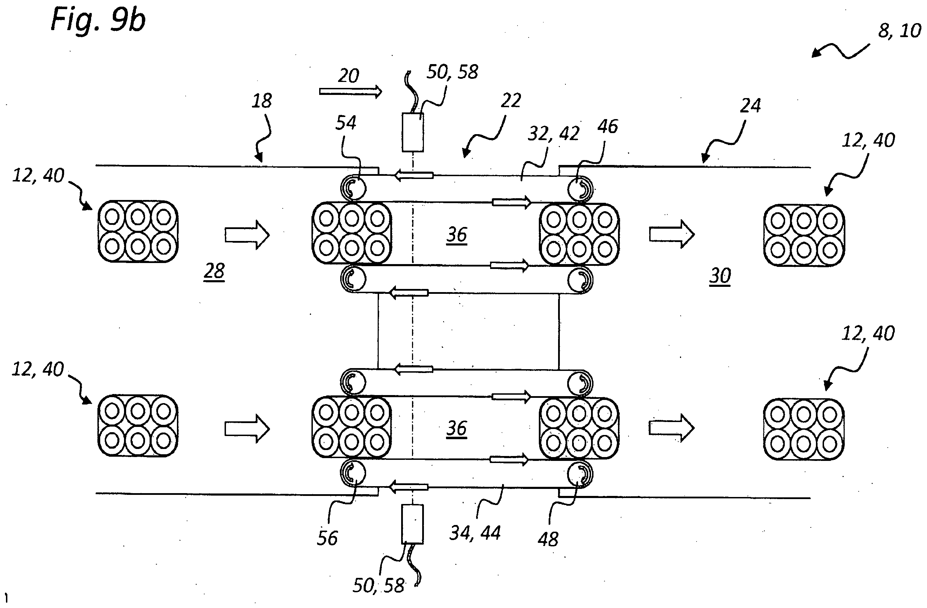

Die schematischen Darstellungen der Figuren 9a und 9b verdeutlichen im Wesentlichen dieselbe Konfiguration der Förder- und Handhabungsvorrichtung 8 wie in Fig. 8 mit dem durch die drei aufeinander folgenden Fördereinrichtungen 18, 22 und 24 gebildeten Transportabschnitt 10. Die optische Erfassungseinrichtung 50 ist in diesem Ausführungsbeispiel jedoch durch eine Lichtschranke 58 gebildet, die den Förderstrom in einem Bereich unterhalb des Transportniveaus erfasst, das durch die Auflageebene der Horizontalfördereinrichtungen 28 und 30 gebildet ist, so dass mit der Lichtschranke 58 im Wesentlichen solche Gebinde 12 erfasst werden können, bei denen sich aufgrund eines mangelhaften Zusammenhaltes und/oder eines nicht ausreichend gespannten Umreifungsbandes 16 einzelne oder mehrere Flüssigkeitsbehälter 14 aus dem Gebindeverbund lösen und nach unten abrutschen, so dass sie in den Erfassungsbereich der optischen Erfassungseinrichtung 50 bzw. der Lichtschranke 58 oberhalb des Ausschleusabschnittes 26 gelangen. Gleichermaßen können mit der Lichtschranke 58 komplett nach unten abrutschende Gebinde 12 erfasst werden, wie es beispielhaft in der schematischen Seitenansicht der Fig. 9a angedeutet ist. Die den optischen Sensor 50 bildende Lichtschranke 58 kann bspw. zu beiden Seiten des Transportabschnittes 10 im Bereich der zweiten Fördereinrichtungen 22 angeordnet sein, wie dies die schematische Draufsicht der Fig. 9b zeigt. Durch eine Ausrichtung der wenigstens einen Lichtschranke 58 mit einem Lichtstrahl senkrecht zur Förderrichtung 20 und einer Platzierung knapp unterhalb des Förderniveaus bzw. des Bodens der in der zweiten Fördereinrichtung 22 transportierten Gebinde 12 lassen sich verrutschende Gebinde 12 und/oder nach unten verrutschende Artikel 14, die sich aus unzureichend umreiften Gebinden 12 lösen, zuverlässig erfassen. Je nach dem Signal, das die Lichtschranke 58 generiert, lassen sich die Förder- und Zugmittelabschnitte 32 und 34 der zweiten Fördereinrichtung 22 in einer Weise steuern, dass die Gebinde 12 ohne weitere Verzögerung in den Ausschleusabschnitt 26 ausgegeben und damit aus dem Förderstrom ausgeschleust werden.

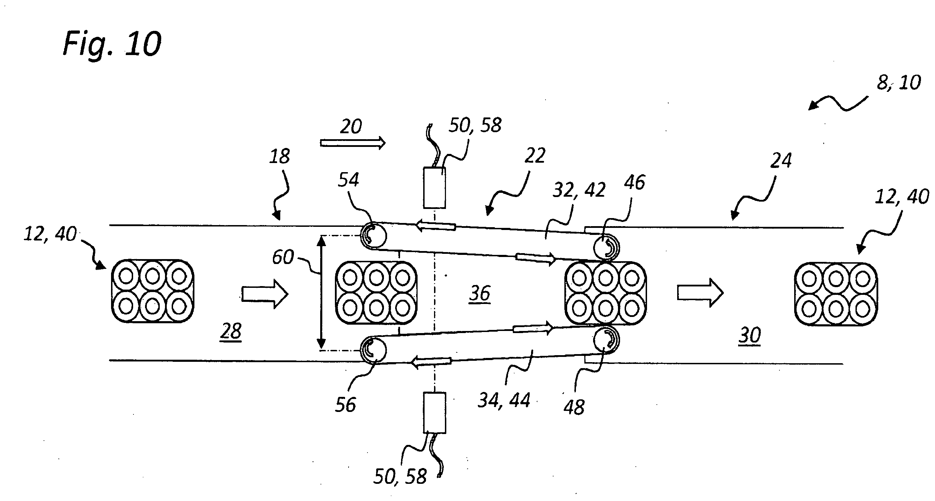

Um bei einem vom optischen Sensor 50, d.h. von der Lichtleiste 52 bzw. von der Lichtschranke 58 als fehlerhaft erkanntes oder lose umreifte Gebinde 12 im Bereich der zweiten Fördereinrichtung 22 zuverlässig nach unten auswerfen bzw. in den Ausschleusabschnitt 26 überführen zu können, kann bspw. ein Abstand der parallelen Förder- und Zugmittelabschnitte 32 und 34 der zweiten Fördereinrichtung 22 zum Zwecke der Ausschleusung definierter Gebinde 12 zumindest temporär und/oder im Bereich jeweils gegenüber liegender Umlenkrollen 54 bzw. 56 oder Antriebsrollen 46 und 48 variierbar und/oder vergrößerbar sein. Die Fig. 10 zeigt eine erste Variante, bei der die Abstände der beiden gegenüber liegenden Umlenkrollen 54 und 56 der beiden parallel umlaufenden Riemen 42 und 44 voneinander vergrößert werden können, um ein verrutschendes oder als fehlerhaft erkanntes Gebinde 12 schnell nach unten auswerfen zu können. Ein zuvor im hinteren Bereich der zweiten Fördereinrichtung 22, in Nähe der hinteren Umlenkrollen 54 und 56 befindliches Gebinde 12 wird durch Vergrößerung des Abstandes 60 zwischen den beiden Umlenkrollen 54 und 56 unmittelbar und ohne weitere Verzögerung aus dem Förderstrom ausgeschleust und in den Ausschleusabschnitt 26 ausgegeben.

Wahlweise können auch die beiden Antriebsrollen 46 und 48 in ähnlicher Weise auseinander geschoben werden, was zu einem ähnlich schnellen Auswurf eines als fehlerhaft erkannten und/oder nach unten verrutschenden Gebindes 12 führen kann, wie dies bei der in Fig. 10 gezeigten Variante der Fall ist.

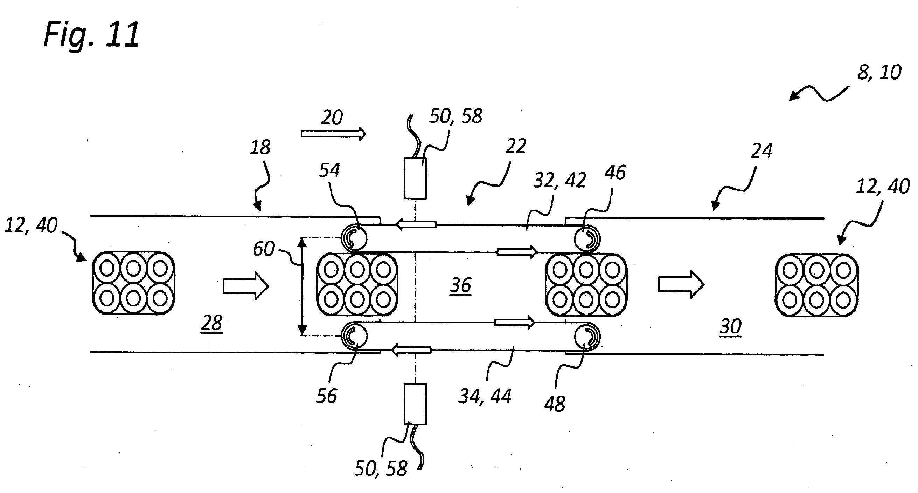

Wie es die schematische Draufsicht der Fig. 11 erkennen lässt, können einzelne Gebinde 12 wahlweise auch durch eine Parallelverschiebung eines der beiden klemmend fördernden Förder- und Zugmittelabschnitte 32 oder 34 aus ihrer klemmenden Förderung gelöst und dadurch nach unten ausgeschleust werden. Um eine solche Abgabe eines Gebindes 12 aus dem Förderstrom in den Ausschleusabschnitt 26 zu ermöglichen, kann bedarfsweise und temporär der Abstand 60 der parallelen Förder- und Zugmittelabschnitte 32 und 34 der zweiten Fördereinrichtung 22 vergrößert werden. Zu diesem Zweck kann insbesondere die zweite bzw. rechte Umlenkrolle 56 sowie die rechte bzw. zweite Antriebsrolle 48 des zweiten Antriebsriemens 44 (d.h. entsprechend Fig. 11 des rechten Antriebsriemens 44) nach rechts verschoben werden, wodurch sich der Abstand 60 kurzzeitig vergrößert, bis die Klemmkraft der beiden Riemen 42 und 44 zum horizontalen Fördern des Gebindes 12 nicht mehr ausreicht. Dieses auszuschleusende Gebinde 12 fällt dadurch nach unten in den Ausschleusabschnitt 26. Unter Umständen kann bei dieser Variante von Nachteil sein, dass von dieser Abstandsvergrößerung nicht nur ein einzelnes befördertes Gebinde 12 beeinflusst werden kann, sondern ggf. auch ein zweites, wie dies in Fig. 11 andeutungsweise erkennbar ist. So kann bei dem vergrößerten Abstand 60 nicht nur das hintere Gebinde 12 ausgeschleust werden, dass sich im Bereich der hinteren Umlenkrollen 54 und 56 befindet, sondern ggf. auch das vordere Gebinde 12, das sich im Bereich der vorderen Antriebsrollen 46 und 48 befindet und möglicherweise noch nicht stabil auf der Horizontalfördereinrichtung 30 der dritten Fördereinrichtung 24 stehend befördert wird.

Sowohl die Steuerungsvariante gemäß Fig. 10 als auch die Variante gemäß Fig. 11 erfordern eine aktive Steuerung des Abstandes 60, was eine Sensorik erfordert, wie sie durch die optischen Sensoren 50 zur Verfügung gestellt werden kann. Beide Eingriffsvarianten beruhen darauf, den Reibschluss zwischen Gebinde 12 und den daran seitlich angreifenden und das Gebinde 12 klemmenden Antriebsriemen 42 und 44 zu unterbrechen und dadurch das Freigeben des entsprechenden Gebindes 12 im Bereich der zweiten Fördereinrichtung 22 zu bewirken.

Da lose oder nicht ausreichend straff umreifte Gebinde 12 ausschließlich innerhalb der zweiten Fördereinrichtung 22 ausgeschleust werden sollen, kann es unter Umständen auch ausreichen, die beiden klemmend fördernden Riemenantriebe 42 und 44 mit oszillierenden und/oder jeweils ungleich voneinander schwankenden Geschwindigkeiten v₁ und v₂ anzutreiben, wodurch die klemmend beförderten Gebinde 12 destabilisiert werden und in ihre einzelnen Bestandteile - die lose zusammengehaltenen Flüssigkeitsbehälter 14 - zerfallen. Diese Einzelteile - die einzelnen Behälter 14 - werden von den Riemen 42 und 44 in diesem Fall nicht mehr geklemmt und verlieren den Kontakt zu den Riemen 42 und 44, wodurch sie nach unten in den Ausschleusabschnitt 26 fallen können, ebenso wie ihre zugehörigen Umreifungsbänder 16.

Die mit den schematischen Figuren 1a bis 11 illustrierten Ausführungsbeispiele sind nicht einschränkend zu verstehen, insbesondere nicht im Hinblick auf die Gebindevariante, die als Umreifungsgebinde 12 gezeigt wurde. Dieselben Erscheinungen und beschriebenen Maßnahmen zur Fehlererkennung und zur Fehlerbehebung bzw. zur Ausschleusung fehlerhafter Gebinde 12 aus einem Förderprozess gelten gleichermaßen für Klebegebinde, bei denen zwei, drei, vier oder auch mehr Behälter 14 wie z.B. Flüssigkeits- bzw. Getränkebehälter 14 mittels Klebestellen aneinander haftend miteinander zu Gebinden 12 verbunden sind. Sofern einzelne solcher Klebestellen, die an Kontaktstellen an Außenmantelflächen aneinander grenzender Behälter 14 platziert sind, nicht ausreichend groß und/oder nicht ausreichend ausgehärtet oder auf sonstige Weise fehlerhaft sind, kann unter Umständen die ausreichende Haftung zwischen den Behältern 14 fehlen, so dass diese bei mechanischer Einwirkung wie Stoß- oder Zugbelastungen auseinander gezogen bzw. voneinander gelöst werden können, was insgesamt als fehlerhaftes Gebinde 12 zu definieren ist. Da ein solchermaßen als fehlerhaft erkanntes Gebinde nicht über die gewünschten mechanischen Eigenschaften verfügt und in diesem fehlerhaften Zustand nicht in den Handel und zum Endkunden gelangen soll, ermöglichen es die beschriebenen Fördereinrichtungen 20, 22 und 24 sowie der beschriebene Ausschleusabschnitt 26, diese Gebinde 12 aus dem Förderprozess zu entfernen. Dies erfolgt grundsätzlich in gleicher Weise wie oben beschrieben, da auch ein fehlerhaftes Klebegebinde ähnliche oder weitgehend dieselben mechanischen Eigenschaften zeigen kann, die ein effektives Ausschleusen aus dem Förderprozess erlaubt.

Auch die mit den Figuren 7a und 7b verdeutlichte Überführung eines Diagonalgebindes 38 in ein Rechteckgebinde 40 (Fig. 7b) oder umgekehrt (Fig. 7a) funktioniert gleichermaßen mit den gezeigten Umreifungsgebinden 12 wie auch mit Klebegebinden (nicht dargestellt), bei denen die Klebestellen, mit denen die Behälter 14 aneinandergefügt sind, noch über eine ausreichende Elastizität und Verformbarkeit nach ihrer Herstellung verfügen, so dass eine solche Gebindemodifikation noch möglich ist. Ggf. können durch Herstellung solcher Klebegebinde auch solche Klebeverbindungen eingesetzt werden, die erst in nachfolgenden Prozessschritten gezielt ausgehärtet werden können, bspw. unter Beaufschlagung mit Heißluft oder UV-Licht o. dgl., insbesondere nachdem eine Umformatierung gemäß Fig. 7 oder eine andere Umformatierung vorgenommen wurde.

Die vorliegende Erfindung wurde unter Bezugnahme auf bevorzugte Ausführungsformen bzw. -varianten unter Bezugnahme auf die Figuren 1 bis 11 beschrieben. Diese beschriebenen Ausführungsvarianten sind jedoch nicht einschränkend zu verstehen, da es für einen Fachmann vorstellbar ist, Abwandlungen oder Änderungen der Erfindung vorzunehmen, ohne dabei den Schutzbereich der nachstehenden Ansprüche zu verlassen.

### Bezugszeichenliste

- 8: Förder- und Handhabungsvorrichtung
- 10: Transportabschnitt
- 12: Gebinde, Umreifungsgebinde
- 14: Behälter, Flüssigkeitsbehälter
- 16: Umreifungsband
- 18: erste Fördereinrichtung
- 20: Förderrichtung
- 22: zweite Fördereinrichtung
- 24: dritte Fördereinrichtung
- 26: Ausschleusabschnitt
- 28: erste Horizontalfördereinrichtung
- 30: weitere Horizontalfördereinrichtung
- 32: erster Förder- und Zugmittelabschnitt, linker Förder- und Zugmittelabschnitt
- 34: zweiter Förder- und Zugmittelabschnitt, rechter Förder- und Zugmittelabschnitt
- 36: Freiraum
- 38: Diagonalanordnung, Diagonalgebinde
- 40: Rechteckanordnung, Rechteckgebinde
- 42: erster Antriebsriemen, linker Antriebsriemen
- 44: zweiter Antriebsriemen, rechter Antriebsriemen
- 46: erste Antriebsrolle, linke Antriebsrolle
- 48: zweite Antriebsrolle, rechte Antriebsrolle
- 50: optische Erfassungseinrichtung, optischer Sensor
- 52: Lichtleiste
- 54: erste Umlenkrolle, linke Umlenkrolle
- 56: zweite Umlenkrolle, rechte Umlenkrolle
- 58: Lichtschranke
- 60: Abstand

- v₁: erste Geschwindigkeit (des ersten Antriebsriemens 42)
- v₂: zweite Geschwindigkeit (des zweiten Antriebsriemens 42)

## Patentansprüche

1. Verfahren zur Förderung und Handhabung von Gebinden (12), welche Gebinde (12) in horizontaler Förderrichtung (20) auf einer ersten Fördereinrichtung (18) befördert und von dieser an eine zweite Fördereinrichtung (22) übergeben werden, welche die Gebinde (12) klemmend an ihren beiden gegenüber liegenden Längsseiten hält und über einen Ausschleusabschnitt (26) befördert und an eine dritte Fördereinrichtung (24) übergibt, **dadurch gekennzeichnet, dass** die Gebinde (12) aus wenigstens zwei zusammengehaltenen und/oder aneinander haftenden Artikeln oder Behältern (14) bestehen, dass die Gebinde (12) in horizontaler Förderrichtung (20) auf der ersten Fördereinrichtung (18) und der dritten Fördereinrichtung (24) stehend zu weiteren Handhabungs-, Verpackungs- und/oder Fördereinrichtungen transportiert werden, dass die wenigstens zwei Artikel oder Behälter (14) jedes Gebindes (12) mittels wenigstens eines Umreifungsbandes (16) und/oder mittels wenigstens einer Klebestelle zusammengehalten sind und dass ein als fehlerhaft erkanntes und/oder lockeres und/oder loses Gebinde (12) im Bereich der zweiten Fördereinrichtung (22) nach unten in den Ausschleusabschnitt (26) ausgeschleust oder aus dem Förderstrom ausgesondert wird.

2. Verfahren nach Anspruch 1, bei dem die Gebinde (12) in der zweiten Fördereinrichtung (22) mittels die jeweils beförderten Gebinde (12) beidseitig an ihren Längsseiten klemmender Förder- und Zugmittelabschnitte (32, 34) über den unterhalb eines Förderniveaus befindlichen Ausschleusabschnitt (26) hinweg und in Richtung der dritten Fördereinrichtung (24) befördert werden.

3. Verfahren nach einem der Ansprüche 1 bis 2, bei dem die Gebinde (12) im Bereich der zweiten Fördereinrichtung (22) in ihrer Anordnung zueinander und/oder hinsichtlich ihrer Außenabmessungen beeinflusst bzw. verändert werden.

4. Verfahren nach Anspruch 3, bei dem ein an die zweite Fördereinrichtung (22) übergebenes und durch wenigstens vier umreifte und/oder aneinander haftende bzw. klebende Artikel oder Behälter (14) gebildetes Gebinde (12) mittels in unterschiedlichen Antriebsgeschwindigkeiten fördernder Förder- und Zugmittelabschnitte (32, 34) von einer Rechteckanordnung (40) in eine Diagonalanordnung (38) oder von einer Diagonalanordnung (38) in eine Rechteckanordnung (40) überführt wird.

5. Verfahren nach Anspruch 4, bei dem die wenigstens vier umreiften und/oder aneinander haftenden bzw. klebenden Artikel oder Behälter (14) eines von einer Diagonalanordnung (38) in eine Rechteckanordnung (40) oder von einer Rechteckanordnung (40) in eine Diagonalanordnung (38) zu überführenden Gebindes (12) in ihrer Lage zueinander mittels ungleichmäßig und/oder mit wechselnden Antriebsgeschwindigkeiten fördernder Förder- und Zugmittelabschnitte (32, 34) verändert werden.

6. Verfahren nach Anspruch 1 oder 2, bei dem ein Abstand (60) der parallelen Förder- und Zugmittelabschnitte (32, 34) der zweiten Fördereinrichtung (22) zur Ausschleusung eines Gebindes (12) zumindest temporär und/oder im Bereich jeweils gegenüber liegender Antriebs- und/oder Umlenkrollen (46, 48, 54, 56) vergrößert wird.

7. Verfahren nach Anspruch 1, 2 oder 6, bei dem der Transportabschnitt (10) zumindest im Bereich der zweiten Fördereinrichtung (22) mittels optischer Sensoren (50) überwacht wird, die fehlerhaft umreifte und/oder lockere und/oder lose Gebinde (12) erkennen und in Abhängigkeit von den Sensorwerten die relative Lage der parallelen Förder- und Zugmittelabschnitte (32, 34) zueinander steuert, um alsfeh-

8. Förder- und Handhabungsvorrichtung (8) für Gebinde (12), welche Vorrichtung (8) eine erste Fördereinrichtung (18) zum Transport der Gebinde (12) in horizontaler. Förderrichtung (20), eine dieser nachgeordnete zweite Fördereinrichtung (22) zum klemmenden Transport der Gebinde (12) unter Kontaktierung dessen beider gegenüber liegender Längsseifen mittels umlaufender Förder- und Zugmittelabschnitte (32. 34) über einen Ausschleusabschnitt sowie eine der zweiten Fördereinrichtung (22) nachgeordnete dritte Fördereinrichtung (24) zum Transport der Gebinde (12) in horizontaler Fördereinrichtung (20) und zu deren Übergabe an weitere Handhabungs-, Verpackungs- und/oder Fördereinrichtungen aufweist, wobei die Vorrichtung (8) zur Handhabung von aus wenigstens zwei zusammengehaltenen und/oder aneinander haftenden Artikeln oder Behältern (14) bestehenden Gebinden (12)vorgesehen und vorbereitet ist, bei welchen die wenigstens zwei Artikel oder Behälter (14) jedes Gebindes (12) mittels wenigstens eines Umreifungsbandes (16) und/oder mittels wenigstens einer Klebestelle zusammengehalten sind, wobei der Transport der Gebinde (12) in horizontaler Förderrichtung (20) auf der ersten Fördereinrichtung (18) und derdritten Fördereinrichtung (24) stehend erfolgt und wobei bei der Vorrichtung (8) ein als fehlerhaft erkanntes und/oder lockeres und/oder loses Gebinde (12) im Bereich der zweiten Fördereinrichtung (22) nach unten in den Ausschleusabschnitt (26) ausschleusbar und/oder auswerfbar ist, **dadurch gekennzeichnet, dass** die Förder- und Zugmittelabschnitte (32, 34) der zweiten Fördereinrichtung (22) paraweise in voneinander differierenden Antriebsgeschwindigkeiten antreibbar sind.

## Claims

1. A method for conveying and handling bundles (12), which are being conveyed in a horizontal conveying direction (20) on a first conveying device (18) and transferred by it to a second conveying device (22), which holds the bundles (12) clamped at their two oppositely located longitudinal sides and conveys them by way of a discharge section (26) and transfers them to a third conveying device (24), **characterised in that** the bundles (12) consist of at least two articles or containers (14) being held together and/or adhering to each other, **in that** the bundles (12) are transported in a horizontal conveying direction (20) in a standing position on the first conveying device (18) and on the third conveying device (24) toward further handling devices, packaging devices and/or conveying devices , **in that** the at least two articles or containers (14) of each bundle (12) are held together by means of at least one strapping band (16) and/or by means of at least one adhesion point, and **in that** a bundle (12), which has been detected to be defective and/or loose and/or to have come undone is discharged downward into the discharge section (26) or removed from the conveyor stream in the section of the second conveying device (22).

2. The method as recited in claim 1, in which the bundles (12) are conveyed in the second conveying device (22) by means of conveying and traction means sections (32,34) clamping on both sides to the longitudinal sides of the respectively conveyed bundles (12) across the discharge section (26) located below a conveying level and in a direction toward the third conveying device (24).

3. The method as recited in one of the claims 1 to 2, in which the bundles (12) are influenced or, as the case may be, changed in their arrangement to each other and/or with regard to their external dimensions in the section of the second conveying device (22).

4. The method as recited in claim 3, in which a bundle (12), which is transferred to the second conveying device (22) and which is formed by at least four articles or containers (14), which are strapped and/or which adhere or stick to each other, as the case may be, is transformed by means of conveying and traction means sections (32,34), which convey at different drive speeds, from a rectangular arrangement (40) into a diagonal arrangement (38) or from a diagonal arrangement (38) into a rectangular arrangement (40).

5. The method as recited in claim 4, in which the at least four articles or containers (14), which are strapped and/or which adhere or stick to each other, as the case may be, of a bundle (12) to be transformed from a diagonal arrangement (38) into a rectangular arrangement (40) or from a rectangular arrangement (40) into a diagonal arrangement (38) are changed in their position to each other by means of conveying and traction means sections (32,34), which convey at irregular and/or changing drive speeds.

6. The method as recited in claim 1 or 2, in which a spacing (60) of the parallel conveying and traction means sections (32,34) of the second conveying device (22) is, for the purpose of discharging a bundle (12), increased at least temporarily and/or in each case in the area of oppositely located drive rollers and/or deflection rollers (46, 48, 54, 56).

7. The method as recited in claim 1, 2 or 6, in which the transport section (10) is monitored at least in the section of the second conveying device (22) by means of optical sensors (50), which detect defectively strapped and/or loose bundles (12) and/or bundles (12) that have come undone, and control the relative position of the parallel conveying and traction means sections (32,34) to each other based on the sensor values in order to discharge bundles (12) which have been detected to be defective.

8. A conveying and handling apparatus (8) for bundles (12), which apparatus (8) has a first conveying device (18) for the transport of the bundles (12) in a horizontal conveying direction (20), a second conveying device (22) arranged downstream therefrom for the clamping transport of the bundles (12) across a discharge section while contacting both of the oppositely located longitudinal sides of the bundles (12) by means of circulating conveying and traction means sections (32,34), and also, arranged downstream from the second conveying device (22), a third conveying device (24) for the transport of the bundles (12) in a horizontal conveying direction (20) and for transferring the bundles (12) to further handling, packaging, and/or conveying devices, wherein the apparatus (8) is provided and prepared for handling bundles (12) consisting of at least two articles or containers (14), which are held together and/or which adhere to each other, in which bundles (12) the at least two articles or containers (14) of each bundle (12) are held together by means of at least one strapping band (16) and/or by means of at least one adhesion point, wherein the bundles (12) are transported in a horizontal conveying direction (20) in a standing position on the first conveying device (18) and on the third conveying device (24), and wherein a bundle (12), which has been detected to be defective and/or loose and/or to have come undone, is dischargeable and/or removable downward into the discharge section (26) in the section of the second conveying device (22), **characterised in that** the conveying and traction means sections (32,34) of the second conveying device (22) are drivable pairwise at drive speeds that differ from each other.

## Revendications

1. Procédé de transport et de manipulation de multipacks (12), lesdits multipacks (12) sont transportés dans la direction de transport (20) horizontale sur un premier dispositif transporteur (18) et sont transmis par celui-ci à un deuxième dispositif transporteur (22) qui maintient par serrage les multipacks (12) sur leurs deux grands côtés opposés et transporte ceux-ci par-dessus une section d'évacuation (26) et les transmet à un troisième dispositif transporteur (24), **caractérisé par le fait que** les multipacks (12) se composent d'au moins deux articles ou récipients (14) maintenus ensemble et/ou adhérant les uns aux autres, que les multipacks (12) sont transportés debout, dans la direction de transport (20) horizontale, sur le premier dispositif transporteur (18) et le troisième dispositif de transport (24) vers d'autres dispositifs de manipulation, d'emballage et/ou de transport, que lesdits au moins deux articles ou récipients (14) de chaque multipacks (12) sont maintenus ensemble au moyen d'au moins une bande de cerclage (16) et/ou au moyen d'au moins un point de collage, et qu'un multipack (12) détecté comme étant défectueux et/ou lâche et/ou détaché est évacué, au niveau du deuxième dispositif transporteur (22), vers le bas dans ladite section d'évacuation (26) ou est trié et éliminé du flux transporté.

2. Procédé selon la revendication 1, dans lequel, dans le deuxième dispositif transporteur (22), les multipacks (12) sont transportés par l'intermédiaire de sections de transport et de moyen de traction (32, 34) serrant les multipacks (12) respectivement transportés de part et d'autre sur leurs grands côtés, par-dessus ladite section d'évacuation (26) située au-dessous d'un niveau de transport et en direction du troisième dispositif transporteur (24).

3. Procédé selon l'une quelconque des revendications 1 à 2, dans lequel, au niveau du deuxième dispositif transporteur (22), les multipacks (12) sont influencés ou bien modifiés dans leur disposition les uns par rapport aux autres et/ou quant à leurs dimensions extérieures.

4. Procédé selon la revendication 3, dans lequel un multipack (12) transmis au deuxième dispositif transporteur (22) et formé par au moins quatre articles ou récipients (14) cerclés et/ou adhérant ou bien collés les uns aux autres est transformé, par l'intermédiaire de sections de transport et de moyen de traction (32, 34) transportant à des vitesses d'entraînement différentes, d'un agencement rectangulaire (40) en un agencement diagonal (38) ou d'un agencement diagonal (38) en un agencement rectangulaire (40).

5. Procédé selon la revendication 4, dans lequel lesdits au moins quatre articles ou récipients (14) cerclés et/ou adhérant ou bien collés les uns aux autres d'un multipack (12) à transformer d'un agencement diagonal (38) en un agencement rectangulaire (40) ou d'un agencement rectangulaire (40) en un agencement diagonal (38) sont modifiés quant à leur position les uns par rapport aux autres par l'intermédiaire de sections de transport et de moyen de traction (32, 34) transportant irrégulièrement et/ou à des vitesses d'entraînement variables.

6. Procédé selon la revendication 1 ou 2, dans lequel, pour l'évacuation d'un multipack (12), une distance (60) des sections parallèles de transport et de moyen de traction (32, 34) du deuxième dispositif transporteur (22) est agrandie au moins temporairement et/ou au niveau de poulies d'entraînement et/ou de renvoi (46, 48, 54, 56) respectivement opposés.

7. Procédé selon la revendication 1, 2 ou 6, dans lequel la section de transport (10), au moins au niveau du deuxième dispositif transporteur (22), est surveillée au moyen de capteurs optiques (50) qui détectent des multipacks (12) cerclés incorrectement et/ou lâches et/ou détachés, et la position relative des sections parallèles de transport et de moyen de traction (32, 34) les unes par rapport aux autres est commandée en fonction des valeurs de capteur afin d'évacuer les multipacks (12) détectés comme étant défectueux.

8. Dispositif de transport et de manipulation (8) pour multipacks (12), ledit dispositif (8) comprend un premier dispositif transporteur (18) pour transporter les multipacks (12) dans la direction de transport (20) horizontale, un deuxième dispositif transporteur (22) qui est monté en aval de celui-ci et destiné à transporter par serrage, par-dessus une section d'évacuation, les multipacks (12) en contactant les deux grands côtés opposés de ceux-ci par l'intermédiaire de sections de transport et de moyen de traction (32, 34) circulantes, ainsi qu'un troisième dispositif transporteur (24) qui est monté en aval du deuxième dispositif transporteur (22) et destiné à transporter les multipacks (12) dans la direction de transport (20) horizontale et à transmettre ceux-ci à d'autres dispositifs de manipulation, d'emballage et/ou de transport, dans lequel le dispositif (8) est prévu et préparé pour la manipulation de multipacks (12) se composant d'au moins deux articles ou récipients (14) maintenus ensemble et/ou adhérant les uns aux autres, dans lesquels lesdits au moins deux articles ou récipients (14) de chaque multipack (12) sont maintenus ensemble au moyen d'au moins une bande de cerclage (16) et/ou au moyen d'au moins un point de collage, dans lequel le transport des multipacks (12) dans la direction de transport (20) horizontale, sur le premier dispositif transporteur (18) et le troisième dispositif transporteur (24), se fait debout, et dans lequel, dans ledit dispositif (8), un multipack (12) détecté comme étant défectueux et/ou lâche et/ou détaché peut être évacué et/ou éjecté, au niveau du deuxième dispositif transporteur (22), vers le bas dans ladite section d'évacuation (26), **caractérisé par le fait que** les sections de transport et de moyen de traction (32, 34) du deuxième dispositif transporteur (22) peuvent être entraînées par paires à des vitesses d'entraînement différant les unes des autres.
